(19)

Europäisches Patentamt

European Patent Office

Office européen des brevets

(11) **EP 2 781 812 B1**

(12) **EUROPEAN PATENT SPECIFICATION**

(45) Date of publication and mention of the grant of the patent:
**27.04.2016 Bulletin 2016/17**

(51) Int Cl.:
*F16K 31/16* *(2006.01)*   *F16K 31/00* *(2006.01)*

(21) Application number: **14158833.5**

(22) Date of filing: **11.03.2014**

(54) **A valve**

Ventil

Soupape

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2013 AU 2013900945**

(43) Date of publication of application:
**24.09.2014 Bulletin 2014/39**

(73) Proprietor: **Nivaru B.V.**
**6031 CN Nederweert (NL)**

(72) Inventor: **van Ruth, Nico**
**Hawthorn East, Victoria 3123 (AU)**

(74) Representative: **Herrmann, Jochen et al**
**Patentanwalt**
**European Patent Attorney**
**Königstrasse 30**
**70173 Stuttgart (DE)**

(56) References cited:
**WO-A1-2011/128527    JP-B1- 5 023 248**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a valve for controlling a flow rate of a fluid flow.

Background of the Invention

Valves are used in many ways to control a fluid flow, and various types of valves are used to control a fluid flow in response to temperature changes within a thermal management system, of which the fluid flow is a part. The control of a fluid flow in response to temperature changes can be achieved through electronically controlled systems using temperature sensors, or through self-actuating type valves, which generate the mechanical energy to control the valve from the thermal energy within the system, whereby the part of the valve that exchanges the thermal energy also acts a temperature sensor.

Many types of self-actuating valves exist that control a fluid flow based on changes in temperature, for example thermostatic radiator valves and temperature relief valves. These valves have in common that the thermal energy is converted into mechanical energy by expansion of a material within the actuator of the valve. This expansion may be related to a phase transition of the material at a given temperature or within a given temperature range, or it may be related to thermal expansion of a material within a certain phase over a certain temperature range.

Document WO2011/128527 A1 discloses a valve according to the preamble of claim 1.

Although existing self-actuating valves that control a fluid flow in response to temperature changes can act as sensors by comparing the temperature of a section of the thermal management system that the valve is part of to a preset temperature (or temperature range), they cannot control the fluid flow in response to temperature differences between different sections of the thermal management system that the valve is part of.

As such, there is a need for technological advancement.

Summary of the Invention

In accordance with a first aspect of the present invention, there is provided a valve for controlling a flow rate of an inlet fluid as defined in independent claim 1. Specifically, the first aspect relates to a valve for controlling a flow rate of an inlet fluid, the valve comprising: a housing portion having at least one fluid inlet and at least one fluid outlet; at least two containers positioned at least partially within the housing portion, the at least two containers defining respective interior portions for receiving a working fluid, characterized in that the interior portions are in fluidal communication with each other, and at least one of the containers is arranged such that the working fluid in that container can exchange thermal energy with the or another inlet fluid, and in that the containers are arranged such that a change in a temperature difference between the working fluid in the respective interior portions of the containers and within a predetermined range of temperature difference causes a quantity of the working fluid to be transferred in or out of at least one of the containers resulting in a change in mass distribution of the working fluid within the containers that causes movement of a portion of the valve which controls the flow rate of the inlet fluid.

In embodiments of the invention, movement of the portion of the valve causes a change in the flow coefficient of the valve, as experienced by fluid flowing from the at least one fluid inlet to the at least one fluid outlet, thereby influencing the flow rate through the at least one fluid inlet.

The range of temperature difference within which actuation can take place typically is predetermined by one or more of: a geometry and relative position of the at least two containers, a relationship between vapour pressure and temperature of the working fluid and an absolute temperature at a liquid-vapour interface of the working fluid during mass transfer, where the boundaries of the range of temperature difference can typically be variable in response to changes in the position of the at least two containers, and to changes in the absolute temperature at a liquid-vapour interface during mass-transfer.

In one embodiment the valve is arranged such that the inlet fluid can exchange thermal energy with the working fluid and the valve controls a flow rate of that inlet fluid. Alternatively, the valve is arranged such that the inlet fluid can exchange thermal energy with the working fluid and the valve controls a flow rate of another inlet fluid.

The valve may be arranged so that the flow coefficient of the valve changes in a manner that is proportional to a change in the temperature difference between the working fluid in the respective interior portions of the containers within the predetermined range of temperature difference. The valve may or may not be arranged to interrupt the flow of the inlet fluid above or below a threshold level of temperature difference.

It will be appreciated that the inlet fluid flow is a fluid flow that either flows into the inlet port or that has flowed through the inlet port but has not yet flowed through the outlet port or any further outlets of the valve.

In one embodiment the housing portion has a plurality of inlet ports for receiving at least one inlet fluid or respective inlet fluids. The housing portion may also have a plurality of outlet ports for exiting of the at least one or a respective inlet fluids.

The valve may be arranged to receive the inlet fluids via respective inlet ports and to keep the flow of the fluids separate such that the inlet fluids exit via respective outlet ports. Alternatively, the valve may be arranged to receive inlet fluids via respective inlet ports and mix the inlet fluids such that a mixed inlet fluid exits the valve at one or more outlet ports. The valve may be arranged to control the flow rate of at least one of the inlet fluids.

In one embodiment the valve is arranged such that a flow rate of a first inlet fluid is controlled based on a difference in temperature between the first and second inlet fluids. Specifically, the valve may be arranged such that a flow coefficient experienced by a first inlet fluid entering through the first inlet port is changed relative to a flow coefficient experienced by a second inlet fluid entering through the second inlet port as a function of a difference in temperature between the first and second inlet fluids. The valve may be arranged to control the fluid flow rate of one of the first and second inlet fluids or both of the first and second inlet fluids.

In embodiments in which the valve comprises a plurality of inlet ports for receiving respective inlet fluids, the valve may be arranged such that a flow rate of at least one of the plurality of inlet fluids is controlled based on a difference in temperature between the at least one inlet fluid and a mixed inlet fluid that is formed by mixing at least some of the plurality of inlet fluids. The combined inlet fluid may exit the valve through at least one outlet port of the valve.

In embodiments of the invention, the valve is arranged such that, by movement of the portion of the valve, the or a further portion of the valve at least partially obstructs one or more inlet ports and/or one or more outlet ports. For example, in embodiments in which the housing comprises a plurality of outlet ports, the or a further portion of the valve may obstruct one of the plurality of outlet ports such that the inlet fluid exits the valve through at least one other of the plurality of outlet ports.

In one embodiment the valve comprises a flow regulator portion that is coupled to at least one of the containers either directly or indirectly such that movement of the at least one container causes movement of the flow regulator portion thereby changing the flow rate of one or more inlet fluids.

The valve may be arranged such that, by the movement of the at least one container, the regulator portion at least partially obstructs one or more inlet ports and/or one or more outlet ports to control the flow rate of the inlet fluid.

If the valve comprises more than one inlet and/or outlet ports, the regulator portion may be arranged such that a flow rate is controlled at any one or each of the inlet and/or outlet ports.

In one embodiment, the at least one container and/or the regulator portion may be positioned in a manner such that at least one of the containers and/or the regulator portion is pivotable relative to the housing portion. In this case the at least one container and/or the regulator portion may be mounted to the housing portion by virtue of a pivot such that the at least one container and/or the flow regulator can pivot in response to the change in temperature difference. Alternatively, the at least one container and/or the flow regulator may be mounted to the housing portion such that the at least one container and/or the flow regulator can move linearly or in any other suitable manner in response to the change in temperature difference.

The valve may be arranged such that the movement of the at least one container and/or the flow regulator portion is substantially transversal relative to a flow direction of the inlet fluid.

In one embodiment, the containers are coupled to each other either directly or indirectly such that in response to the change in the temperature difference the at least two containers move together.

In a specific embodiment, the fluidal communication between the at least two containers is effected via a suitable conduit that may be provided in the form of a bore in a wall portion that separates the respective interior portions of two adjacent containers.

The valve may also be arranged such that, when the quantity of the working fluid is transferred into or out of at least one of the containers, movement of the or another container is caused while the one container remains substantially stationary.

The at least two containers may be interconnected such that in use a closed system is formed. The closed system typically comprises a closable inlet port for charging the containers with a working fluid.

The valve may comprise the working fluid. The working fluid may comprise a liquid component and a gaseous component.

The gaseous component of the working fluid may comprise a vapour of the liquid component that is in, or close to, liquid-vapour equilibrium with the liquid component at a liquid-vapour interface or interfaces.

In an alternative embodiment, the working fluid may be one of two or more working fluids. The valve may be arranged such that a quantity of a first working fluid is transferred out of one container and in response a quantity of a second fluid is transferred into another one of the containers in response to the change in temperature difference. The first and second actuator fluids may be substantially separated from one another. For example, the valve may be arranged such that the first and second working fluids are separated by a physical barrier, such as a flexible membrane. In another example, the first and second working fluids may be substantially separated by virtue of respective properties of the working fluids. For example, the working fluids may be selected to be substantially immiscible with each other.

In one embodiment, respective lower regions of the respective interior portions of the at least two containers are interconnected so as to allow a flow of the liquid component of the actuator fluid and/or the further working fluid therebetween.

It will be appreciated that various types of working fluids may be used that have a liquid component that is in, or close to, liquid-vapour equilibrium with a gaseous component within a predetermined temperature and pressure range. The gaseous component may comprise the vapour of the liquid component. Some liquid components may provide certain advantages, for example highly volatile liquids for quick transfer of the fluid, or liquids with a relatively high density for high mass transfer per volume unit, and liquids with an atmospheric boiling point around the application temperature, to avoid restrictively large pressure differences between the inside of the actuator and the ambient. The actuator fluid may comprise a halogenated organic compound of the type typically used as a refrigerant, such as a fluorinated organic liquid.

In one embodiment, in use the at least two containers may be positioned such that when the temperatures of the working fluid in the respective interior portions of the containers is substantially identical, the respective interior portions comprise both the liquid and the gaseous component of the working fluid, and the level of the liquid component in the respective interior portions is substantially identical.

Alternatively, in use the at least two containers may be positioned such that when the temperatures of the working fluid in the respective interior portions of the containers is substantially identical, at least one of the respective interior portions does not comprise both the liquid and the gaseous component of the working fluid.

In this case, the valve may be arranged such that a difference in the position of the at least two containers in a direction of gravity is indicative of a threshold of temperature difference between the working fluid in the respective interior portions of the containers that needs to be exceeded such that a quantity of the liquid component of the working fluid is transferred in or out of the at least one container.

It will be appreciated that the predetermined temperature difference range in which the liquid component of the working fluid can transfer in or out of the at least one container is at least partially dependent upon the difference between the minimum and maximum levels of the liquid component within the at least two containers and, consequently, a larger difference between the minimum and maximum levels during fluid transfer between the at least two containers will result in a larger temperature difference range in which the valve controls the flow rate.

In a further embodiment, a first container of the at least two containers has a first material property and a second container of the at least two containers has a second material property such that the exchange of thermal energy of the first and second containers with the or another inlet fluid is different.

In accordance with a second aspect of the invention, there is provided a valve system comprising a plurality of valves in accordance with the first aspect of the invention. The valve system may comprise a plurality of inlet ports for receiving respective plurality of inlet fluid flows and at least one outlet port through which a combined fluid flow can exit the valve system.

In accordance with a third aspect of the invention, there is provided a heat transfer system for heating purposes comprising:

> a heat transferrer for transferring heat obtainable from an energy source to a heating medium, the heat transferrer having an inlet for receiving the heating medium, a heat transfer portion for transferring heat obtained from the energy source to the received heating medium, and an outlet for the heated heating medium to exit therethrough; and
> a heating medium transfer network for transferring the heating medium between the outlet of the heat transferrer and the inlet of the heat transferrer, the transfer network comprising a plurality of heat exchangers through which the heating medium flows, which transfer heat from the heating medium to a further medium, and being arranged to allow the heating medium to be transferred from the outlet of the heat transferrer to the inlet of the heat transferrer by virtue of the plurality of heat exchangers; the transfer network being connected to the at least one inlet of the heat transferrer;
> wherein the at least one inlet of the heat transferrer comprises at least one valve in accordance with the first aspect of the present invention and wherein the at least one valve has a plurality of inlet ports and wherein the valve is arranged such that the plurality of heat exchangers are connected to respective inlet ports of the at least one valve.

In one embodiment, the heat transfer system is arranged to control the temperature difference between the heating medium flowing through the plurality of inlet ports. In a specific embodiment, the heat transfer system is arranged to minimise the temperature difference between the heating medium flowing through the plurality of inlet ports.

In a fourth aspect of the invention, there is provided a heat transfer system for heating purposes comprising:

> a heat transferrer for transferring heat obtainable from an energy source to a heating medium, the heat transferrer having an inlet for receiving the heating medium, a heat transfer portion for transferring heat obtained from the energy source to the received heating medium, and an outlet for the heated heating medium to exit therethrough; and

a heating medium transfer network for transferring the heating medium between the outlet of the heat transferrer and the inlet of the heat transferrer, the transfer network comprising a plurality of heat exchangers through which the heating medium flows, which transfers heat from the heating medium to a further medium, and being arranged to allow the heating medium to be transferred from the outlet of the heat transferrer to the inlet of the heat transferrer by virtue of the plurality of heat exchangers; the transfer network being connected to the at least one inlet of the heat transferrer;

wherein the at least one inlet of the heat transferrer comprises a valve system in accordance with the second aspect of the present invention, the valve system having a plurality of inlet ports and being such that the plurality of heat exchangers are connected to the respective plurality of inlet ports of the valve system.

In a fifth aspect of the invention, there is provided a heat transfer system for cooling purposes comprising:

a heat transferrer for transferring heat obtainable from a cooling medium to a heat sink, the heat transferrer having an inlet for receiving the cooling medium, a heat transfer portion for transferring heat obtained from the received cooling medium to the heat sink, and an outlet for the cooled cooling medium to exit therethrough; and
a cooling medium transfer network for transferring the cooling medium between the outlet of the heat transferrer and the inlet of the heat transferrer, the transfer network comprising a plurality heat exchangers through which the cooling medium flows, which transfer heat to the cooling medium from a further medium, and being arranged to allow the cooling medium to be transferred from the outlet of the heat transferrer to the inlet of the heat transferrer by virtue of the plurality of heat exchangers; the transfer network being connected to the at least one inlet of the heat transferrer;
wherein the at least one inlet of the heat transferrer comprises at least one valve in accordance with the first aspect of the present invention, the at least one valve having a plurality of inlet ports and being arranged such that the plurality of heat exchangers are connected to respective inlet ports of the at least one valve.

In a sixth aspect of the invention, there is provided a heat exchanger system comprising at least one valve in accordance with the first aspect of the invention.

The heat exchanger system may be a counter flow heat exchanger system. In this case, the heat exchanger system comprises a first inlet port and a first outlet port through which a first fluid flows, and a second inlet port and a second outlet port through which a second fluid flows.

In one embodiment, the first container of the valve is positioned to exchange heat with the first fluid flow, and the second container of the valve is positioned to exchange heat with the second fluid flow of the heat exchanger system, and the valve can regulate either the fluid flow through the first inlet port, the second outlet port, or the fluid flow through both ports, based on the temperature difference between the first and second container.

In embodiments in which the at least two containers are positioned such that the difference in the position in a direction of gravity of the at least two containers is indicative of a threshold of temperature difference between the working fluid in the respective interior portions of the containers, the containers may be positioned such that the threshold of temperature difference is similar, substantially identical or proportional to a target temperature difference between the fluid flow through the first inlet port and the fluid flow through the second outlet port, where the target temperature difference may be such that the heat capacity rates on both sides of the counter flow heat exchanger are equal.

In one embodiment, the fluid flow through at least one of the two inlet ports can be driven by natural convection.

In a seventh aspect of the invention, there is provided a heat storage comprising:

a vessel for storing fluid,
a valve in accordance with the first aspect of the invention, wherein the inlet fluid flow through the at least one inlet port of the valve is driven by natural convection and the at least one outlet port is arranged to direct the inlet fluid into the vessel,
wherein the valve is arranged to regulate the flow rate of the inlet fluid based on a temperature difference between the inlet fluid and the fluid inside the vessel.

Brief Description of the Drawings

The present invention will now be described, by way of example only, with reference to the accompanying drawings, in which:

Figure 1 is a schematic drawing of a thermal actuator portion of a valve in accordance with an embodiment of the present invention;

Figures 2a to 2i are schematic drawings of thermal actuator portions of a valve of embodiments of the present invention in different scenarios;

Figures 3a to 3f are drawings of a flow-balancing valve in accordance with an embodiment of the present invention;

Figures 4a to 4f are drawings of a flow-balancing valve according to an embodiment of the present invention;

Figures 5a and 5b are schematic drawings of space heating systems incorporating valves and valve systems in accordance with embodiments of the present invention;

Figures 6a to 6f are drawings of a flow-balancing valve in accordance with an embodiment of the present invention;

Figures 7a to 7d are drawings of a flow-balancing valve in accordance with an embodiment of the present invention;

Figures 8a and 8b are schematic drawings of space cooling and space heating systems incorporating valves and valve systems in accordance with embodiments of the present invention;

Figures 9a and 9b are drawings of a flow-regulating valve according to an embodiment of the present invention;

Figures 10a and 10b are schematic drawings of a counter-flow heat exchange system incorporating a valve in accordance with embodiments of the present invention;

Figures 11a to 11d are drawings of a flow-regulating valve according to an embodiment of the present invention;

Figures 12a to 12e are drawings of a flow-switching valve according to an embodiment of the present invention; and

Figure 13 is a drawing of a heat storage system incorporating valves in accordance with embodiments of the present invention

## Detailed Description of Embodiments of the Invention

Embodiments of the invention relate to a valve for controlling a flow rate of a fluid flow. The valve comprises at least two containers that may have a regulator portion and that function as a thermal actuator. The containers are in fluidal communication with each other such that a working fluid within the containers can flow between the containers. A change in the temperature difference between the working fluid in the respective two containers causes movement of a portion of the valve such as one container thereby altering the flow rate of the fluid flow.

In a specific example, the flow rate of the fluid flow is dependent on the temperature difference between the two containers.

The valve comprises a thermal actuator that is a further development of a thermal actuator described in detail in US patent application No 13/622133.

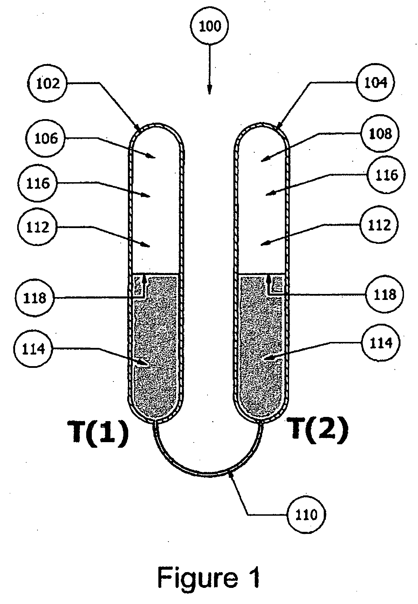

Referring now to Figure 1 the function of the thermal actuator of a valve in accordance with a particular embodiment is now described. Figure 1 shows a thermal actuator 100 comprising a first container 102 and a second container 104, each of the containers 102, 104 defining respective interior portions 106, 108. The interior portions 106, 108 are in fluidal communication with one another via a conduit 110 such that a closed system is formed, and contain a working fluid 112. The fluid 112 comprises a first liquid component 114 and a second gaseous component 116, where the gaseous component 116 consists, completely or at least for a significant portion, of the vapour of the liquid component 114.

The thermal actuator 100 is arranged such that a change in a temperature difference between the first and second containers 102, 104 will cause a quantity of the fluid 112 to be transferred from one container 102, 104 to the other container 104, 102 such that a mass distribution of the thermal actuator 100 is altered in response to the temperature change. This alteration of the mass distribution can be used so as to cause actuation of a valve.

A transfer of the liquid component 114 between the containers 102, 104 to effect the alteration in the mass distribution, as opposed to a transfer of the gaseous component 116, would be advantageous as only a fraction of the liquid component 114 would be required to evaporate to push the liquid component 114 between the containers 102, 104. As such, respective lower regions of the interior portions 106, 108 of the first and second containers 102, 104 are interconnected so as to promote flow of the liquid component 114 therebetween. It will be appreciated, however, that other arrangements are possible and that transferring the gaseous component 116 will still work, however this type of transfer will be slower compared to transfer of the liquid component 114 as in this case all of the liquid component 114 that is to be transferred will need to evaporate.

In this example, the fluid 112 is transferred between the containers 102, 104 in response to the change in temperature difference between the containers 102, 104, however it will be appreciated that the fluid that is transferred between the two containers 102, 104 so as to effect the change in mass distribution of the thermal actuator 100 may be a further liquid. Further examples of these types of thermal actuators will be described in more detail later, however the basic operating principle of the thermal actuator 100 will now be described.

Typically, in use, each of the containers 102, 104 will be exposed to a different surrounding temperature. In this example, the first container 102 is exposed to a first surrounding temperature $T_1$ and the second container 104 is exposed to a second surrounding temperature $T_2$.

The liquid component 114 and/or the gaseous component 116 of the fluid 112 can be transferred between the first and second containers 102, 104 via the conduit 110. The thermal actuator 100 is arranged such that a liquid-vapour interface 118 between the liquid and gaseous components 114, 116 is formable in each container 102, 104.

Typically, the liquid component 114 is at, or close to, equilibrium with the gaseous component 116 at the liquid-vapour interface or interfaces 118. As discussed above, the thermal actuator 100 may also comprise a further fluid, i.e. a further liquid, which can form a liquid-liquid interface with the liquid component 114 of the fluid 112.

In a scenario wherein the container 102, 104 contains a liquid-vapour interface 118, pressure of the gaseous component 116 in the container 102, 104 is at, or close to, a vapour pressure of the liquid component 114 at the liquid-vapour interface 118, at the temperature T1, T2 at the liquid-vapour interface 118.

In a scenario in which the container 102, 104 does not contain a liquid-vapour interface 118, for example if the container 102, 104 is completely filled with the liquid component 114 or completely filled with the gaseous component 116, a pressure in the container 102, 104 will be dictated by a pressure in the other container 104, 102 (or further container(s) for examples comprising more than two containers) that does (or do) contain a liquid-vapour interface 118, whilst also taking into account any pressure generated by gravitational forces due to differences in positional height between the liquid levels of the containers 102, 104.

In the case in which the container 102, 104 is completely filled with the liquid component 114, if a temperature of the liquid component 114 exceeds a boiling temperature of the liquid component 114 at a given pressure, caused by the temperature in the container 102, 104 increasing or by the pressure decreasing as a result of a decrease in temperature in the other container 104, 102, at least a portion of the liquid component 114 will start to vaporize, and a liquid-vapour interface 118 will form in the container 102, 104.

In the case in which the container 102, 104 is completely filled with the gaseous component 116, if a temperature of the gaseous component 116 falls below a condensation temperature at a given pressure, caused by the temperature in the container 102, 104 decreasing or by the pressure increasing as a result of an increase in temperature in the other container 104, 102, at least a portion of the gaseous component 116 will condensate, and a liquid-vapour interface 118 will form in the container 102, 104.

In containers 102, 104 that contain a liquid-vapour interface 118, a change in temperature at the liquid-vapour interface 118 will lead to either vaporisation of the liquid component 114 (in the case of increasing temperature) or condensation of the gaseous component 116 (in the case of decreasing temperature) to accommodate for the change in equilibrium vapour pressure associated with the temperature change.

In the case wherein multiple containers 102, 104 contain a liquid-vapour interface 118, if the temperature changes in one of the containers 102, 104, for example if the temperature $T_1$, $T_2$ surrounding the container 102, 104 increases in temperature relative to the other container 104, 102 (or relative to further containers), then vaporisation in one of the containers 102, 104, will be accompanied by condensation in the other container 104, 102 to accommodate for the change in vapour pressure in the container 102, 104.

It will be appreciated that the thermal actuator 100 will work with virtually all liquids. Some liquids may provide certain advantages, for example highly volatile liquids for quick transfer of the liquid component, or liquids with a relatively high density for high mass transfer per volume unit, and liquids with an atmospheric boiling point around the application temperature, to avoid restrictively large pressure differences between the inside of the actuator and the ambient. Halogenated organic compounds of the types commonly used as refrigerants are very suitable, particularly fluorinated organic compounds. In one example, the liquid may be a perfluorinated liquid such as perfluorohexane, having a high density ($\sim$1.7 g/cm$^3$), a low heat of fusion ($\sim$88 kJ/kg) and a boiling point of $\sim$56 °C at atmospheric pressure. In another example, the liquid may be a partially fluorinated liquid such as methyl-nonafluorobutylether.

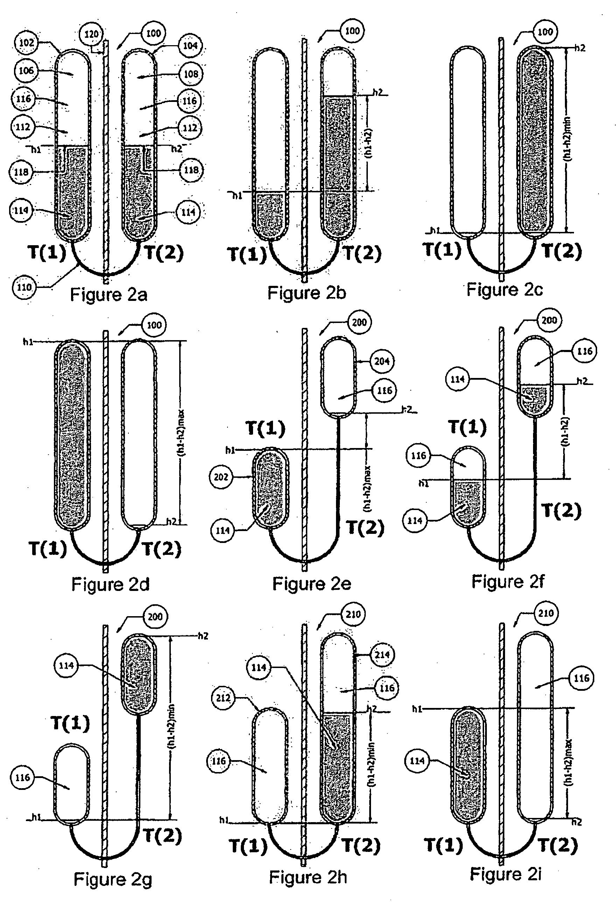

Referring to Figures 2a to 2i, transfer of fluid 112 between containers 102, 104 in different scenarios will now be described.

Referring initially to Figure 2a, the first container 102 is in thermal contact with its surroundings, for example the first container 102 may be surrounded by a first liquid at a temperature $T_1$, and the second container 104 is in thermal contact with its surroundings, for example the second container 104 may be surrounded by a second liquid, at a temperature $T_2$. The surroundings, i.e., the first and second liquids, are sufficiently physically separated, as indicated by a wall 120, to allow a temperature difference to be present between $T_1$ and $T_2$. Respective interior portions of the first and second containers 102, 104 are connected via the conduit 110 to form a closed system. A portion of the thermal actuator 100 is filled with the liquid component 114 of the fluid 112, and a remaining portion of the thermal actuator 100 is filled with the gaseous component 116 of the fluid 112, thus forming the liquid-vapour interfaces 118 between the liquid and gaseous components 114, 116.

The fluid 112 may be a pure substance, in which case the relationship between a vapour pressure p of the liquid component 114 and a temperature $T$ at the liquid-vapour interface 118 can be described by the Antoine equation:

$$\log_{10} p \ = \ A-B/(C+T) \qquad\qquad \text{(Equation 1)}$$

wherein:

> p is the vapour pressure (bar) of the liquid component 114;
> $T$ is the temperature (K) at the liquid-vapour interface 118; and
> A, B, C are constants specific for the liquid component 114.

Alternatively, the fluid 112 may be a mixture of substances, in which case the relationship between the vapour pressure p and the temperature $T$ is more complex and is specific for each mixture of substances.

In the case in which the first and second containers 102, 104 are partially filled, the relationship between the vapour pressures and levels of the liquid components 114 of each container 102, 104 can be described by the following equation:

$$p_1(T_1)-p_2(T_2) \ = \ -\rho*g*(h_1-h_2) \qquad \text{(Equation 2)}$$

wherein:

> p(T) is the vapour pressure (bar) of the liquid component 114 in its respective container 102, 104 at its respective temperature $T_1, T_2$.
> $\rho$ is a density ($kg/m^3$) of the liquid component 114;
> g is gravitational acceleration (9.81 $m/s^2$); and
> h is a level (m) of the liquid component 114 in its respective container 102, 104.

If the second container 104 is completely filled with the liquid component 114, or the first container 102 is completely filled with the gaseous component 116, the difference between the levels of the liquid component 114 in each container 102, 104 will be at its minimum value $(h_1-h_2)_{min}$, and the relationship can be described by the following equation:

$$p_1(T_1)-p_2(T_2) \ \geq \ -\rho*g*(h_1-h_2)_{min} \qquad \text{(Equation 3)}$$

If the first container 102 is completely filled with the liquid component 114, or the second container 104 is completely filled with the gaseous component 116, the difference between the levels of the liquid component 114 in each container 102, 104 will be at its maximum value $(h_1-h_2)_{max}$, and the relationship can be described by the following equation:

$$p_1(T_1)-p_2(T_2) \ \leq \ -\rho*g*(h_1-h_2)_{max} \qquad \text{(Equation 4)}$$

Figures 2a to 2d illustrate the thermal actuator 100 when the first and second containers 102, 104 are positioned at the same level, and a volume of the liquid component 114 is more than half of a total volume of internal portions of the containers 102, 104 of the thermal actuator 100.

Figure 2a illustrates an example in which $T_1$ is equal to $T_2$, and the liquid levels $h_1$ and $h_2$ are equal. In this example, Equation 2 applies.

Figure 2b illustrates an example in which $T_1$ is slightly higher than $T_2$, but the difference between $T_1$ and $T_2$ is not sufficiently high so as to cause the second container 104 to be completely filled with the liquid component 114. In this example, Equation 2 applies.

Figure 2c illustrates an example in which $T_1$ is significantly higher than $T_2$. The difference between $T_1$ and $T_2$ is sufficiently large so as cause the second container 104 to be completely filled with the liquid component 114. In this example, Equation 3 applies.

Figure 2d illustrates an example in which $T_2$ is significantly higher than $T_1$. The difference between $T_1$ and $T_2$ is sufficiently large so as to cause the first container 102 to be completely filled with the liquid component 114. In this example Equation 4 applies.

Figures 2e to 2g illustrate a thermal actuator 200 having first and second containers 202, 204 in which the second container 204 is positioned at a higher level than the first container 202, and wherein a volume of the liquid component 114 is more than half of a total volume of internal portions of the first and second containers 202, 204 of the thermal actuator 200.

Figure 2e illustrates an example in which temperature $T_1$ is equal to temperature $T_2$, in which case the first container 202 is filled completely with the liquid component 114 as the entire first container 202 is positioned below the second container 204. In this example Equation 4 applies.

Figure 2f illustrates an example in which temperature $T_1$ is slightly higher than temperature $T_2$. The difference in temperatures is sufficiently large so as to cause a portion of the liquid component 114 to move from the first container 202 to the second container 204, but not enough to fill the second container 204 completely with the liquid component 114. In this example Equation 2 applies.

Figure 2g illustrates an example in which temperature $T_1$ is significantly higher than temperature $T_2$. The difference in temperatures is sufficiently large so as to cause the second container 204 to be completely filled with the liquid component 114. In this example Equation 3 applies.

Figures 2h and 2i illustrate a thermal actuator 210 in which the first and second containers 212, 214 are positioned at the same level and wherein a volume of the second container 214 is larger than a volume of the first container 212 and an amount of the liquid component 114 contained in internal portions of the thermal actuator 210 is not sufficient to completely fill the second container 214.

Figure 2h illustrates an example in which temperature $T_1$ is significantly higher than temperature $T_2$ to such an extent so as to cause the first container 212 to be completely filled with the gaseous component 116. In this example Equation 3 applies.

Figure 2i illustrates an example in which temperature $T_2$ is significantly higher than temperature $T_1$ to such an extent so as to cause the first container 212 to be completely filled with the liquid component 114. In this example Equation 4 applies.

In the above examples, the liquid component 114 that is transferred between the first and second containers 102, 104; 202, 204; 212, 214 in response to a change in a temperature difference between the first and second containers 102, 104; 202, 204; 212, 214 so as to effect a change in a mass distribution of the thermal actuator 100, 200, 210 is a component of the fluid 112 that forms the liquid-vapour interface 118. It will be appreciated, however, that a liquid that is transferred between the first and second containers 102, 104; 202, 204; 212, 214 may be a further fluid other than the fluid 112 that forms the liquid-vapour interface 118.

The thermal actuator described with reference to Figures 1 and 2 may be used in a valve in accordance with embodiments of the present invention.

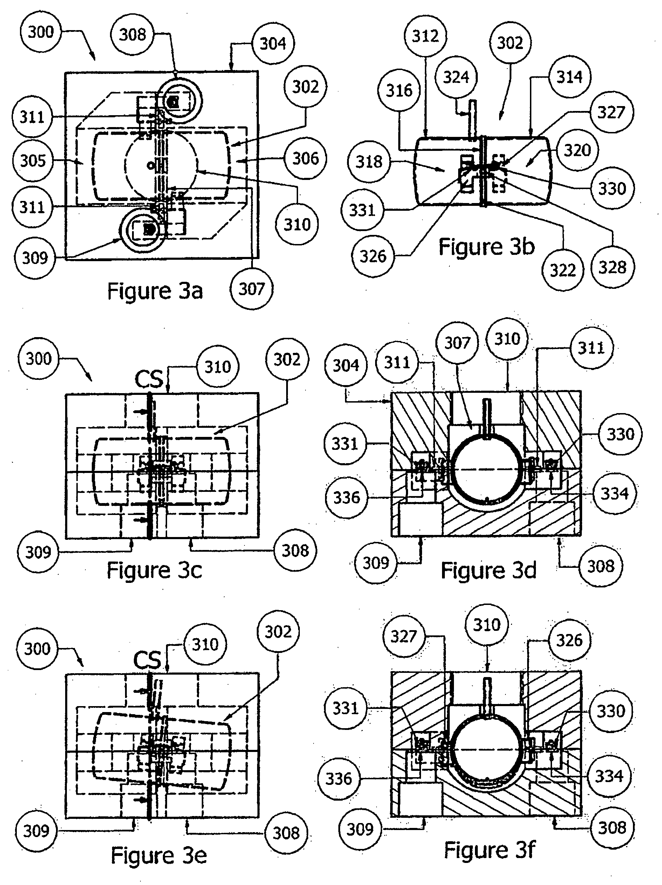

An embodiment of one such valve 300 is shown in Figures 3a to 3f. The valve 300 is a three-port flow-balancing valve for balancing fluid flow rates through two parallel heat exchangers, where the heat exchangers draw heat from the fluid flow in normal use. In this embodiment, the valve 300 comprises a thermal actuator 302 coupled to a valve housing 304 as shown in a bottom view of the valve 300 in Figure 3a in which hidden lines are illustrated as dashed lines. The cavity within the valve housing 304 in which the thermal actuator 302 is positioned, is divided into a first internal section 305 and a second internal section 306, which are substantially separated by a dividing portion 307, which is in close proximity to, though not normally in contact with, the thermal actuator 302, so as to prevent a substantial flow of fluid between the first internal section 305 and the second internal section 306.

The valve housing 304 comprises a first inlet port 308 for receiving a first fluid flow and a second inlet port 309 for receiving a second fluid flow. The first fluid flow through the first inlet port 308 is directed to the first internal section 305 of the valve housing 304, and the second fluid flow through the second inlet port 309 is directed to the second internal section 306 of the valve housing 304. The valve housing 304 also comprises an outlet port 310 through which a combined fluid flow of the first and second fluid flows can exit the valve 300.

The valve 300 also comprises two pivot pins 311, which are attached to the valve housing 304 and coupled to the thermal actuator 302, which allow the thermal actuator 302 to pivot within the valve housing 304.

The thermal actuator 302 of the valve 300 will now be described in more detail with reference to Figure 3b, which shows a side view of the thermal actuator 302, with hidden lines shown as dashed lines.

The thermal actuator 302 comprises a first cup 312, a second cup 314, and a central disc 316, where the first cup 312 together with the central disc 316 form a first container 318, and the second cup 314 together with the central disc 316 form a second container 320. In other words, the first and second containers 318, 320 are directly coupled to each other. It will be appreciated that other arrangements are envisaged such as the first container 318 being indirectly coupled to the second container 320 by virtue of a conduit or the like.

Inner portions of the first container 318 and the second container 320 are in fluidal communication with one another via an opening 322 such as an aperture in a lower section of the central disc 316. The actuator 302 also comprises a filling tube 324 that can be used to fill the thermal actuator 302 with a working fluid. The filling tube 324 is arranged to be closable after filling such that the first and second containers 318, 320 form a closed system.

The first cup 312 is attached to a first suspension bracket 326, and the second cup 314 is attached to a second suspension bracket 327, each of which comprises a pivot hole 328, for coupling the thermal actuator 302 to the pivot pins 311 of the valve 300.

The first suspension bracket 326 comprises a first flow regulator 330, and the second suspension bracket 327 comprises a second flow regulator 331.

It will be appreciated that a valve in accordance with embodiments of the invention may or may not comprise flow regulators 330, 331 coupled to the thermal actuator 302. In some embodiments, at least one of the containers 318, 320 may be arranged to at least partially obstruct the first inlet port 308 or the second inlet port 309.

The influence of heat conduction within the thermal actuator 302, i.e. between the first container 318 and the second container 320, may be limited by making the surface area of the first and second cups 312, 314 significantly larger than the surface area of the central disc 316, by making the central disc 316 significantly thicker than the first and second cups 312, 314, or by choosing a material for the central disc 316 that has a lower thermal conductivity than the material of the first cup 312 and the second cup 314.

The thermal actuator 302 is filled with a working fluid such as the fluid 112 so that the thermal actuator 302 is partly filled with the liquid component 114 and partly with the gaseous component 116.

In use, a first fluid flow entering through the first inlet port 308 flows around the first container 318, which as a result will be at, or close to, a temperature of the first fluid flow, and a second fluid flow entering through the second inlet port 309 flows around the second container 320, which as a result will be at, or close to, a temperature of the second fluid flow.

A quantity of the liquid component 114 inside the thermal actuator 302 will flow from the first container 318 to the second container 320, or vice versa, depending on the temperature difference between the first and second fluid flows and the level difference between the first and second containers 318, 320 as explained with reference to the thermal actuator 100; 200; 202 of Figures 1 and 2 which will result in an altered mass distribution of the fluid 112 within thermal actuator 302.

The operation of the valve 300 will now be described in more detail with reference to Figures 3c, 3d, 3e and 3f. Figure 3c is a side view of the valve 300 with hidden lines shown as dashed lines, where the thermal actuator 302 is in a neutral position, and the line marked CS indicates a cross-section plane, which indicates the viewpoint of Figure 3d. Figure 3e is a side view of the valve 300 with hidden lines shown as dashed lines, where the thermal actuator 302 is in a tilted position, and the line marked CS indicates a cross-section plane, which indicates the viewpoint of Figure 3f.

With reference to Figure 3d, the valve housing 304 comprises a first orifice 334, through which the first fluid flows after passing through the first inlet port 308, and a second orifice 336, through which the second fluid flows after passing through the second inlet port 309. The flow rate of the first fluid flow through the first orifice 334 is regulated by the first flow regulator 330, and the flow rate of the second fluid flow through the second orifice 336 is regulated by the second flow regulator 331.

In Figures 3c and 3d the thermal actuator 302 is in a neutral position, where both flow regulators 330, 331 create the same amount of obstruction to the respective first and second fluid flows through the respective first and second orifices 334, 336.

In Figures 3e and 3f the thermal actuator 302 is in a tilted position, as a result of which the distance between the first flow regulator 330 and the first orifice 334 decreases, and the distance between the second flow regulator 331 and the second orifice 336 increases. As a consequence, the first flow regulator 330 creates significantly more obstruction to the first fluid flow through inlet port 308, than the second flow regulator 331 creates to the second fluid flow through the second inlet port 309.

The tilt of the thermal actuator 302 is influenced by the mass distribution of the fluid 112 inside the actuator 302, as well as by the force exerted on the first and second flow regulators 330, 331 by the first and second fluid flows, as they experience a pressure drop while passing the flow regulators 330, 331. The change in the net force exerted on the thermal actuator 302 by the pressure drop of the first and second fluid flows, as the thermal actuator 302 tilts, will typically be in the direction opposite of the tilt direction, thereby creating gradual tilt of the thermal actuator 302, and a gradual regulating action of the flow regulators 330, 331.

For example, if in the neutral position depicted in Figures 3c and 3d the flow rates and temperatures of the first and second fluid flows are substantially identical, the mass distribution of the fluid 112 within the thermal actuator 302 will be neutral, with approximately the same amount of the liquid component 114 in the first container 318 as in the second container 320. When at a given point in time the temperature of the first fluid flow increases relative to the temperature of the second fluid flow, the temperature of the first container 318 will increase relative to the temperature of the second container 320, which will cause at least a quantity of the liquid component 114 to transfer from the first container 318 to the second container 320. This change in mass distribution inside the thermal actuator 302 will cause the thermal actuator 302 to tilt, with the second container 320 moving downwards, as it contains more of the liquid component 114, and with the first container moving upward, as it contains more of the gaseous component 116, leading to the tilted position depicted in Figures 3e and 3f. As shown in Figure 3f, the first flow regulator 330 is positioned significantly closer to the first orifice 334, and the second flow regulator 331 is positioned further away from the second orifice 336, so the first fluid flow experiences a significantly higher pressure drop than the second fluid flow. Further, a net force is exerted on the thermal actuator 302 which pushes against the tilt direction, back to the neutral position as shown in Figures 3c, 3d.

In a system where the first fluid flow and the second fluid flow represent the return flows from two parallel heat exchangers that draw heat from the fluid flows, reducing the flow rate of the first fluid flow will result in a decrease of the temperature of the first fluid flow. This way the movement of the thermal actuator 302 will reduce the temperature difference that was the driving force behind the movement of the thermal actuator 302, creating a negative feedback loop which allows the thermal actuator 302 to be stable in the position of Figures 3e and 3f, which represent an intermediate position. When the thermal actuator 302 is stable in an intermediate position, the temperature difference between the first container 318 and the second container 320 will correspond to the level difference of the liquid components 114, between the first container 318 and the second container 320.

In order to create a stable regulation system, the rate at which the thermal actuator 302 tilts, as a function of temperature difference, should be proportional to the rate with which the temperature of the first or second fluid flows can respond to a change in flow rate. The speed with which the thermal actuator 302 moves, as a function of temperature difference, may be tailored in many ways, for example through the choice of the fluid 112 (relationship between vapour pressure and temperature, liquid viscosity), the volume of the first and second containers 318, 320, and the size of the opening 322.

In a system where the first fluid flow and the second fluid flow represent the return flows from two parallel heat exchangers that draw heat from the fluid flows, the valve 300 regulates the rates of the first and second fluid flows relative to each other, so as to keep their respective temperatures at approximately the same level. The regulation action occurs by creating a difference in pressure drop between the first and second fluid flows, which occurs as the thermal actuator 302 tilts and changes the positions of the first and second flow regulators 330, 331. The amount of difference in pressure drop that may be created by the valve 300 depends on a number of design factors, such as the size of first and second containers 318, 320, the amount of the liquid component 114 relative to the gaseous component 116 within the thermal actuator 302, the position of the flow regulators 330, 331 relative to the dimensions of the thermal actuator 302 (which determines the leverage factor), the size of the orifices 334, 336, and the maximum tilt angle of the thermal actuator 302. The design factors should be tailored so that the difference in pressure drop created by the valve 300 is proportional to the pressure drop within the parallel heat exchanger circuits, within the applicable range of flow rates.

Although the valve 300 can be designed so that sufficient force is exerted by the thermal actuator 302 to close at least one of the orifices 334, 336 completely, if the flow rate of the first or second fluid flow becomes sufficiently minimal or is entirely blocked, the temperature of the first or second fluid flow will lose its influence on the temperature in the respective first or second containers 318, 320, and the temperature difference between the first container 318 and the second container 320 will decrease as a result, which will lead to the actuator returning to a less tilted position, where more fluid can flow through the relevant orifice 334, 336.

It will be appreciated that the valve 300 may only comprise one inlet port such as inlet port 308 for receiving a fluid flow. In such an arrangement, the temperature of the fluid flow is associated with the first container 318 while the temperature of the second container 320 may be associated with the temperature of the surrounding atmosphere, the temperature of a fluid in a vessel or the like. A change in the temperature difference between the first and second containers 318, 320 causes movement of a flow regulator such that the inlet port is at least partially obstructed. The resulting flow rate of the fluid flow is dependent on the temperature difference between the first and second containers 318, 320.

A plurality of valves of the type described in Figure 3 may be combined to form a valve system with a plurality of fluid flow inlets, where all the fluid flows are balanced and combined to a single fluid flow outlet. In such a system, each valve balances two fluid flows, and the outlet of each valve becomes the inlet flow of a further valve in a higher tier. In other words, a system with four inlet flows can be created with two first tier valves, the outlets of which are combined into one second tier valve, and a system with eight inlet ports can be created with four first tier valves, the outlets of which are combined and directed into two second tier valves, the outlets of which are combined and directed into one third tier valve.

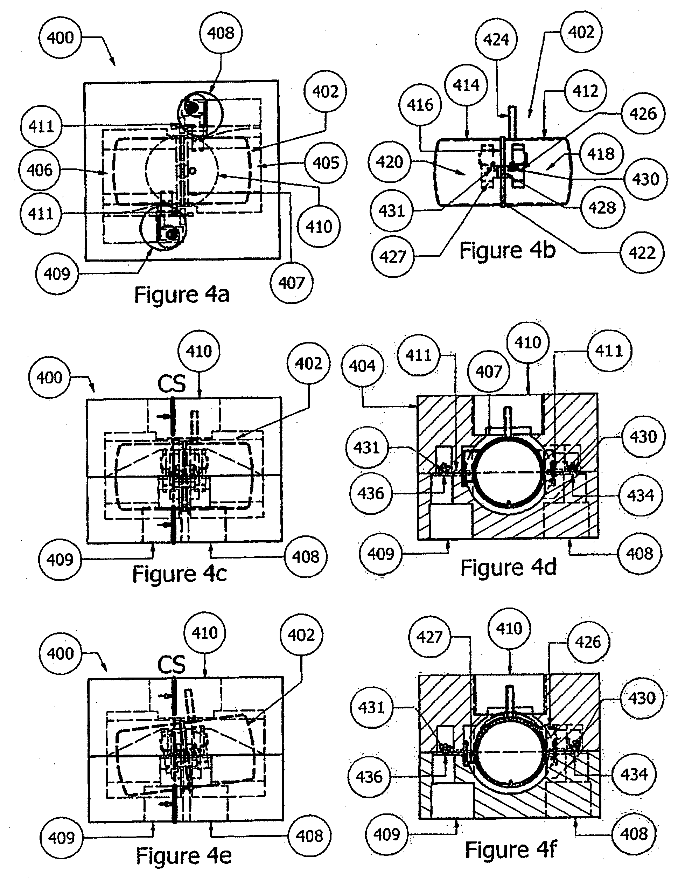

Referring now to Figures 4a to 4f, there is shown a valve 400 in accordance with a further embodiment of the invention.

Figure 4a shows a bottom view of the valve 400, with hidden lines shown as dashed lines. Similar to the valve 300 shown in Figure 4, the valve 400 is a three-port flow-balancing valve for balancing the fluid flow rates through two parallel heat exchangers. The valve 400 comprises a thermal actuator 402 positioned within a valve housing 404 The housing 404 is divided into first and second internal sections 405, 406, that are substantially separated by a dividing portion 407. The valve housing 404 comprises first and second inlet ports 408, 409 for receiving respective first and second fluid flows, and an outlet port 410 through which a combined fluid flow can exit the valve 400. The valve 400 also comprises two pivot pins 411, which allow the thermal actuator 402 to pivot within the valve housing 404.

The thermal actuator 402 will now be described in more detail with reference to Figure 4b, which shows a side view of the thermal actuator 402, with hidden lines shown as dashed lines.

The thermal actuator 402 comprises a first cup 412, a second cup 414, and a central disc 416, where the first cup 412 together with the central disc 416 form a first container 418, and the second cup 414 together with the central disc 416 form a second container 420. Inner portions of the first container 418 and the second container 420 are in fluidal communication with one another via an opening 422 in a lower section of the central disc 416. The thermal actuator 402 also comprises a filling tube 424 that can be used to fill the thermal actuator 402 with a working fluid such as fluid 112.

The first cup 412 is attached to a first suspension bracket 426, and the second cup 414 is attached to a second suspension bracket 427, each of which comprises a pivot hole 428, for coupling the thermal actuator 402 to the pivot pins 411 of the valve 400.

The first suspension bracket 426 comprises a first flow regulator 430, and the second suspension bracket 427 comprises a second flow regulator 431.

In this example, the thermal actuator 402 is filled with a working fluid such as the fluid 112 so that the thermal actuator is partly filled with the liquid component 114 and partly with the gaseous component 116. In use, a first fluid flow entering through the first inlet port 408 flows around the first container 318, which as a result will be at, or close to, a temperature of the first fluid flow, and a second fluid flow entering through the second inlet port 409 flows around the second container 420, which as a result will be at, or close to, a temperature of the second fluid flow.

A quantity of the liquid component 114 inside the thermal actuator 402 will flow from the first container 418 to the second container 420, or vice versa, depending on the temperature difference and the level difference between the first and second containers 418, 420 as explained with reference to the thermal actuator 100; 200; 202 of Figure 2 which will result in an altered mass distribution of the fluid 112 within thermal actuator 402.

The operation of the valve 400 will now be described in more detail with reference to Figures 4c, 4d, 4e and 4f. Figure 4c is a side view of the valve 400, with hidden lines shown as dashed lines, where the thermal actuator 402 is in a neutral position, and the line marked CS indicates a cross-section plane, which indicates the viewpoint of Figure 4d. Figure 4e is a side view of the valve 400, with hidden lines shown as dashed lines, where the thermal actuator 402 is in a tilted position, and the line marked CS indicates a cross-section plane, which indicates the viewpoint of Figure 4f.

With reference to Figure 4d, the valve housing 404 comprises a first orifice 434, through which the first fluid flows after passing through the first inlet port 408, and a second orifice 436, through which the second fluid flows after passing through the second inlet port 409. The flow rate of the first fluid flow is regulated by the first flow regulator 430, and the flow rate of the second fluid flow is regulated by the second flow regulator 431.

In Figures 4c and 4d the thermal actuator 402 is in a neutral position, where both flow regulators 430, 431 create the same amount of obstruction to the respective first and second fluid flows through the respective first and second orifices 434, 436.

In Figures 4e and 4f the thermal actuator 402 is in a tilted position, as a result of which the distance between the first flow regulator 430 and the first orifice 434 has increased, and the distance between the second flow regulator 431 and the second orifice 436 has decreased. As a result, the first flow regulator 430 creates significantly less obstruction to the first fluid flow through inlet port 408, than the second flow regulator 431 creates to the second fluid flow through the second inlet port 409.

The tilt of the thermal actuator 402 is influenced by the mass distribution of the fluid inside the thermal actuator 402, as well as by the force exerted on the first and second flow regulators 430, 431 by the first and second fluid flow, as they experience a pressure loss while passing the flow regulators 430, 431. The change in the net force exerted on the thermal actuator 402 by the pressure loss of the first and second fluid flow, as the thermal actuator 402 tilts, will typically be in the direction opposite of the tilt direction, thereby creating gradual tilt of the thermal actuator 402, and a gradual regulating action of the flow regulators 430, 431.

For example, if in the neutral position depicted in Figures 4c and 4d the flow rates and temperatures of the first and second fluid flow are the same, then the mass distribution of the fluid within the thermal actuator 402 will also be neutral, with approximately the same amount of the liquid component 114 in the first container 418 as in the second container 420. When at a given point in time the temperature of the first fluid flow increases relative to the second fluid flow, the temperature of the first container 418 will increase relative to the second container 420, which will cause an amount of the liquid component 114 to transfer from the first container 418 to the second container 420. This change in mass distribution inside the thermal actuator 402 will cause the thermal actuator 402 to tilt, with the second container 420 moving downwards, as it contains more of the liquid component 114, than the first container 418 which moves upward. This leads to the tilted position as depicted in Figures 4e and 4f. In Figure 4f it can be seen that the second flow regulator 431 has moved significantly closer to the second orifice 436, and that the first flow regulator 430 has moved away from the first orifice 434, so that the second fluid flow experiences a significantly higher pressure drop than the second fluid flow, and a net force is exerted on the thermal actuator 402, pushing against the tilt direction, back to the neutral position.

In a system where the first fluid flow and the second fluid flow represent return flows from two parallel heat exchangers that transfer heat to the fluid flows, reducing the flow rate of the second fluid flow will result in an increase of the temperature of the second fluid flow. This way the movement of the thermal actuator 402 will reduce the temperature difference that was the driving force behind the movement of the thermal actuator 402, creating a negative feedback loop which allows the actuator to be stable in the position of Figures 3e and 3f, which represent an intermediate position. When the thermal actuator 402 is stable in an intermediate position, the temperature difference between the first container 418 and the second container 420 will correspond to the level difference of the liquid component 114 between the first container 418 and the second container 420.

In order to create a stable regulation system, the rate at which the actuator 402 tilts, as a function of temperature difference, should be proportional to the rate with which the temperature of the first or second fluid flow can respond to a change in flow rate. The speed with which the thermal actuator 402 moves as a function of temperature difference, can be tailored in many ways, for example through the choice of the fluid 112 (relationship between vapour pressure and temperature, liquid viscosity), the volume of the first and second containers 418, 420, and the size of the opening 422.

In a system where the first fluid flow and the second fluid flow represent the return flows from two parallel heat exchangers that transfer heat to the fluid flows, the valve 400 regulates the first and second fluid flow relative to each other, so as to keep their respective temperatures at approximately the same level. The regulation action occurs by creating a difference in pressure drop between the first and second fluid flows, which occurs as the thermal actuator 402 tilts and changes the positions of the first and second flow regulators 430, 431. The amount of difference in pressure drop that can be created by the valve 400 depends on a number of design factors, such as the size of first and second containers 418, 420, the amount of the liquid component 114 within the thermal actuator 402, the position of the flow regulators 430, 431 relative to the dimensions of the thermal actuator 402 (which determines the leverage factor), the size of the orifices 434, 436, and the maximum tilt angle of the thermal actuator 402. The design factors should be tailored so that the difference in pressure drop created by the valve 400 is proportional to the pressure drop within the parallel heat exchanger circuits, within the applicable range of flow rates.

Although the valve 400 can be designed so that enough force is exerted by the thermal actuator 402 to close the orifices 434, 436 completely, if the flow rate of the first or second fluid flow becomes extremely minimal or is entirely blocked, the temperature of the first or second fluid flow will lose its influence on the temperature in the respective first or second containers 418, 420, and the temperature difference between the first container 418 and the second container 420 will decrease as a result, which will lead to the actuator returning to a less tilted position, where more flow can enter through the respective orifices 434, 436.

It will be appreciated that the valve 400 may only comprise one inlet port for receiving a fluid flow. In such an arrangement, the temperature of the fluid flow is associated with the first container 418 while the second container 420 may be associated with the temperature of the surrounding atmosphere, the temperature of a fluid in a vessel or the like. A change in the temperature difference between the first and second containers 418, 420 causes movement of the flow regulators 430, 431 such that the inlet port is at least partially obstructed. The resulting flow rate of the fluid flow is dependent on the temperature difference between the first and second containers 418, 420.

A plurality of valves of the type described in Figure 4 may be combined to form valve systems with a multitude of fluid flow inlets, where all the flows are balanced and combined to a single fluid flow outlet. In such a system each valve will balance 2 fluid flows, and the outlet of each valve becomes the inlet flow of a valve in a higher tier.

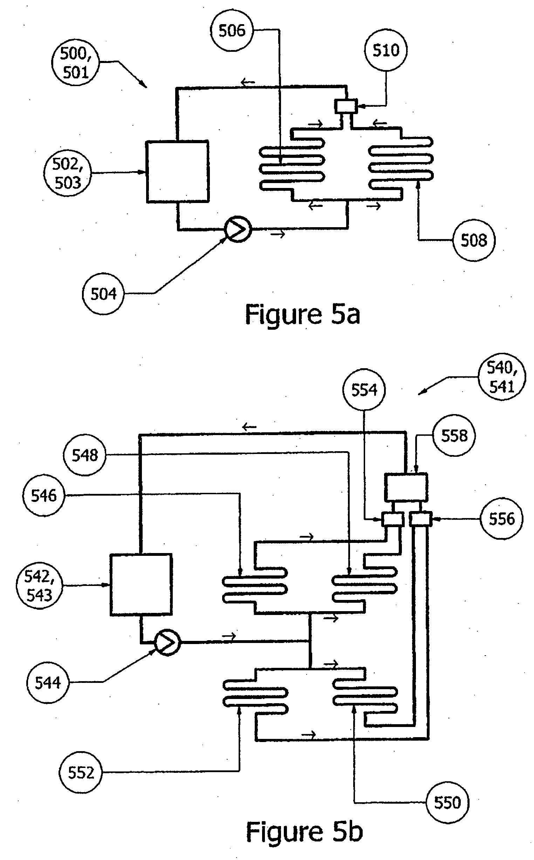

Figure 5a shows a schematic drawing of an example of a process application of the valve 300 and the valve 400, where either the valve 300 or the valve 400 is used in the valve position 510, to balance the flow rates of the return fluid flows from two parallel heat exchangers 506, 508. In applications where, in normal operation, heat is drawn from the fluid flow by the heat exchangers, the valve 300 may be used. In applications where, in normal operation, heat is transferred to the fluid flow by the heat exchangers, the valve 400 may be used.

With reference to a first exemplary space heating system 500, the heating system 500 uses the valve 300 described with reference to Figure 3 in valve position 510. The heat drawn from the fluid flow by the heat exchangers 506, 508 is used for space heating.

The heating system 500 further comprises a container for containing a heating medium in the form of a heat source 502, a heat transferrer in the form of a pump 504, and a heating medium transfer network comprising a first heat exchanger 506 and a second heat exchanger 508.

The first heat exchanger 506 is connected to the first inlet port 308 of the valve 300, and the second heat exchanger 508 is connected to the second inlet port 309 of the valve 300.

The first and second heat exchangers 506, 508 are exposed to varying external conditions, with the heating demand of heat exchanger 506 sometimes greater than the heating demand of heat exchanger 508, and sometimes smaller. The flow coefficient of the two heat exchangers 506, 508 will be considered to be the same for this example.

When the pump 504 starts pumping, the valve 300 is in, or close to, its neutral position, as described with reference to Figures 3c and 3d, since the first and second containers 318, 320 will be at substantially the same temperature. The pump 504 starts pumping high temperature fluid from the heat source 502, which will enter the first and second heat exchangers 506, 508, and will exit these heat exchangers at a lower temperature level, since the heat exchangers draw heat from the first and second fluid flows. If the second heat exchanger 508 has a higher heat demand than the first heat exchanger 506, the temperature of the first fluid flow into the first inlet port 308 of the valve 300 will be higher than the temperature of the second fluid flow into the second inlet port 309 of the valve 300. The valve 300 will respond by increasing the pressure drop which the first fluid flow experiences through the valve 300, and decreasing the pressure drop which the second fluid flow experiences through the valve 300, as described with reference to Figures 3e and 3f. As a result the flow rate of the second fluid flow will increase, correspondent to the higher heat demand in the second heat exchanger 508, and the flow rate of the first fluid flow will decrease, correspondent to the lower heat demand of the first heat exchanger 506. The higher flow rate through the second heat exchanger 508 will increase the temperature of the second fluid flow, and the lower flow rate through the first heat exchanger will decrease the temperature of the first fluid flow, which will reduce the original temperature difference, creating the negative feedback loop that allows the valve 300 to be in a stable intermediate position.

With reference to another example, a basic space cooling system 501 is described with reference to Figure 5a. The cooling system 501 uses the valve 400 described with reference to Figure 4 at valve position 510. The heat transferred to the fluid flow by the heat exchangers 506, 508 comes from space cooling. The type of heat exchanger may be a floor or wall surface with a heating tube inside, through which the fluid flow passes.

The space cooling system 501 further comprises a container for containing a cooling medium in the form of a heat sink 503, a heat transferrer in form of a pump 504, and a cooling medium transfer network comprising a first heat exchanger 506 and a second heat exchanger 508.

The first heat exchanger 506 is connected to the first inlet port 408 of the valve 400, and the second heat exchanger 508 is connected to the second inlet port 409 of the valve 400.

The first and second heat exchangers 506, 508 are exposed to varying external conditions, with the cooling demand of heat exchanger 506 sometimes greater than the cooling demand of heat exchanger 507, and sometimes smaller. The flow coefficient of the two heat exchangers 506, 508 will be considered to be the same for this example.

When the pump 504 starts pumping, the valve 400 is in, or close to, its neutral position, as described with reference to Figures 4c and 4d, since the first and second containers 418, 420 will be at substantially the same temperature. The pump 504 starts pumping low temperature fluid from the heat sink, which will enter the first and second heat exchangers 506, 508, and will exit these heat exchangers at a higher temperature level, since the heat exchangers transfer heat to the first and second fluid flows. If the second heat exchanger 508 has a smaller cooling demand than the first heat exchanger 506, the temperature of the first fluid flow into the first inlet port 408 of the valve 400 will be higher than the temperature of the second fluid flow into the second inlet port 409 of the valve 400. The valve will respond by increasing the pressure drop the second fluid flow experiences through the valve 400, and decreasing the pressure drop the first fluid flow experiences through the valve 400, as described with reference to Figures 4e and 4f. As a result the flow rate of the second fluid flow will decrease, correspondent to the smaller cooling demand in the second heat exchanger 508, and the flow rate of the first fluid flow will increase, correspondent to the higher cooling demand of the first heat exchanger 506. The lower flow rate through the second heat exchanger 508 will increase the temperature of the second fluid flow, and the higher flow rate through the first heat exchanger will decrease the temperature of the first fluid flow, which will reduce the original temperature difference, creating the negative feedback loop that allows the valve 400 to be in a stable intermediate position.

Figure 5b shows examples of a process application using multiple 3-port valves, such as the valve 300 or valve 400, to balance more than two fluid flows relative to each other, where either the function of valve 300 or the function of valve 400 is used to balance the flow rates of return fluid flows from four parallel heat exchangers. This process application contains three valve positions, a first valve position 554, a second valve position 556, and a third valve position 558. In applications where, in normal operation, heat is drawn from the fluid flow by the heat exchangers, the valve 300 is used in all three valve position 554, 556, 558, in applications where, in normal operation, heat is transferred to the fluid flow by the heat exchangers, the valve 400 is used in all three valve positions 554, 556, 558.

In the first example of Figure 5b using the valve 300 in all valve positions 554, 556, 558, the heat drawn from the fluid flow by the heat exchangers is used for space heating. The heat transferred to the fluid flow by the heat exchangers comes from space cooling. The type of heat exchanger may be a floor or wall surface with a heating tube inside, through which the fluid flow passes.

When the valve 300 is used, Figure 5b depicts a basic space heating system 540 comprising a container for containing a heating medium in the form of a heat source 542, a heat transferrer in the form of a pump 544, a heating medium transfer network comprising a first heat exchanger 546, a second heat exchanger 548, a third heat exchanger 550 and a fourth heat exchanger 552, a valve 300 at a first valve position 554, a valve 300 at a second valve position 556 and a valve 300 at a third valve position 558.

The return flow from the first heat exchanger 546 is connected to the first inlet port 308 of the valve 300 in the first valve position 554, the return flow from the second heat exchanger 548 is connected to the second inlet port 309 of the valve 300 in the first valve position 554, the return flow from the third heat exchanger 550 is connected to the first inlet port 308 of the valve 300 in the second valve position 556, and the return flow from the fourth heat exchanger 552 is connected to the second inlet port 309 of the valve 300 in the second valve position 556. The outlet flows from the valve 300 in the first valve position 554 is the inlet flow into the first inlet port 309 of the valve 300 in the third valve position 558, and the outlet flow from the valve 300 in the second valve position 556 is the inlet flow into the second inlet port 309 of the valve 300 in the third valve position 558.

The first, second, third and fourth heat exchangers 546, 548, 550, 552 are exposed to varying external conditions, with the heating demand of each heat exchanger sometimes greater than the heating demand of one or more of the other heat exchangers, and sometimes smaller. The flow coefficient of the four heat exchangers 546, 548, 550, 552 will be considered to be substantially the same for this example, but it should be noted that the system will also work when the heat exchangers have different flow coefficients.

When the pump 504 starts pumping, the valve 300 in all three positions 554, 556, 558 is in, or close to, its neutral position, as described with reference to Figure 3c and 3d, since the first and second containers 318, 320 will be at substantially the same temperature. The pump 544 starts pumping high temperature fluid from the heat source, which will enter the first, second, third and fourth heat exchangers 546, 548, 550, 552 and will exit these heat exchangers at a lower temperature level, since the heat exchangers draw heat from the first and second fluid flows. If, for example, the fourth heat exchanger 552 has a higher heat demand than the first, second and third heat exchangers 546, 548, 550, with the heat demand of these three heat exchangers being substantially the same in this example, the temperature of the first fluid flow into the first inlet port 308 of the valve 300 in the second valve position 556 will be higher than the temperature of the second fluid flow into the second inlet port 309 of the valve 300 in the second valve position 556, and the valve will respond as described with reference to Figure 5a. As a result of the higher heat demand of the fourth heat exchanger 552, the outlet temperature of the valve 300 in the second valve position 556 will be lower than the outlet temperature of the valve 300 in the first valve position 554. The outlet flow of the valve 300 in the first valve position is the first inlet flow of the valve 300 in the third valve position 558, and the outlet flow of the valve 300 in the second valve position 556 is the second inlet flow of the valve 300 in the third valve position 558, and the valve 300 in the third valve position 558 will respond to the difference in temperature between the inlet flows by moving to the position described with reference to Figure 3e and 3f. As a result, the flow rates through the first, second and third heat exchangers 546, 548, 550 will be reduced, and the flow rate through the fourth heat exchanger 552 is increased, in line with the relative heating demand of the heat exchangers.

In the second example shown in Figure 5b in which the valve 400 is used at the first, second and third valve positions 554, 556, 556, a basic space cooling system 541 is shown. The basic space cooling system 541 comprises a container for containing a cooling medium in the form of a heat sink 543, a heat transferrer in the form of a pump 544, a heating medium transfer network comprising a first heat exchanger 546, a second heat exchanger 548, a third heat exchanger 550 and a fourth heat exchanger 552, a valve 400 at the first valve position 554, a valve 400 at the second valve position 556 and a valve 400 at the third valve position 558.

The return flow from the first heat exchanger 546 is connected to the first inlet port 408 of the valve 400 in the first valve position 554, the return flow from the second heat exchanger 548 is connected to the second inlet port 409 of the valve 400 in the first valve position 554, the return flow from the third heat exchanger 550 is connected to the first inlet port 408 of the valve 400 in the second valve position 556, and the return flow from the fourth heat exchanger 552 is connected to the second inlet port 409 of the valve 400 in the second valve position 556. The outlet flows from the valve 400 in the first valve position 554 is the inlet flow into the first inlet port 408 of the valve 400 in the third valve position 558, and the outlet flow from the valve 400 in the second valve position 556 is the inlet flow into the second inlet port 409 of the valve 400 in the third valve position 558.

The first, second, third and fourth heat exchangers 546, 548, 550, 552 are exposed to varying external conditions, with the cooling demand of each heat exchanger sometimes greater than the cooling demand of one or more of the other heat exchangers, and sometimes smaller. The flow coefficient of the four heat exchangers 546, 548, 550, 552 will be considered to be substantially the same for this example, but it should be noted that the system will also work when the heat exchangers have different flow coefficients.

When the pump 504 starts pumping, the valve 400 in all three positions 554, 556, 558 is in, or close to, its neutral position, as described with reference to Figure 4c and 4d, since the first and second containers 418, 420 will be at substantially the same temperature. The pump 544 starts pumping low temperature fluid from the heat sink, which will enter the first, second, third and fourth heat exchangers 546, 548, 550, 552 and will exit these heat exchangers at a higher temperature level, since the heat exchangers transfer heat to the fluid flows. If, for example, the first heat exchanger 546 has a higher cooling demand than the second, third and fourth heat exchangers 548, 550, 552, with the cooling demand of these three heat exchangers being substantially the same in this example, the temperature of the first fluid flow into the first inlet port 408 of the valve 400 in the first valve position 554 will be higher than the temperature of the second fluid flow into the second inlet port 409 of the valve 400 in the first valve position 554, and the valve will respond as described with reference to Figure 5a. As a result of the higher cooling demand of the first heat exchanger 546, the outlet temperature of the valve 400 in the first valve position 554 will be higher than the outlet temperature of the valve 400 in the second valve position 556. The outlet flow of the valve 400 in the first valve position is the first inlet flow of the valve 400 in the third valve position 558, and the outlet flow of the valve 400 in the second valve position 556 is the second inlet flow of the valve 400 in the third valve position 558, and the valve 400 in the third valve position 558 will respond to the difference in temperature between the inlet flows by moving to the position described with reference to Figure 4e and 4f. As a result, the flow rates through the second, third and fourth heat exchangers 548, 550, 552 will be reduced, and the flow rate through the first heat exchanger 546 is increased, in line with the relative cooling demand of the heat exchangers.

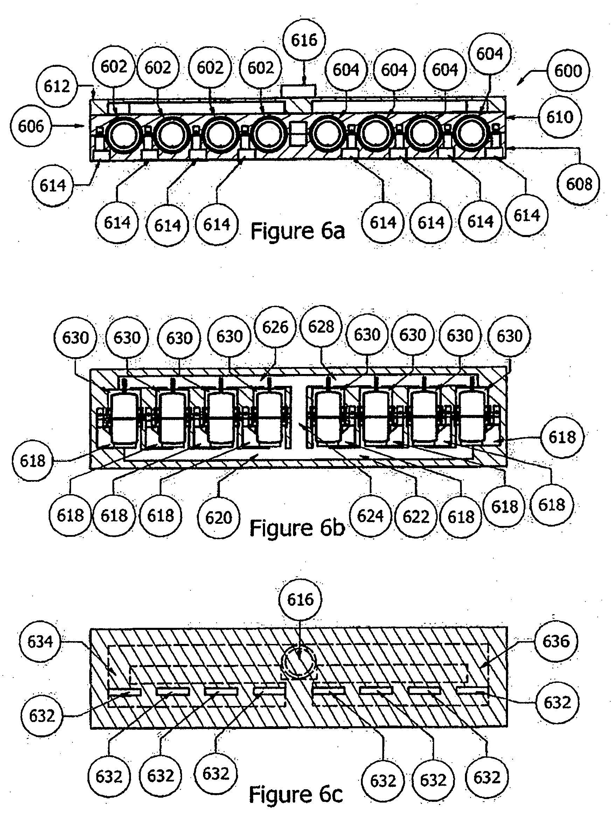

Another embodiment of the present invention is a multiport balancing valve, shown in Figure 6a to 6f, which balances the flow of more than two heat exchangers in a single valve. The valve 600 is a 9 port valve that can balance up to eight heat exchangers, but the design can be adjusted to balance any number (greater than 1) of heat exchangers in a single valve.

Referring to Figure 6a, which is a front-on cross-section view of the valve 600, where the cross-section plane bisects the inlet ports, the valve 600 comprises four thermal actuators 602, four thermal actuators 604, and a valve housing 606 comprising a lower housing part 608, an upper housing part 610, and a housing lid 612. The valve housing 606 comprises 8 inlet ports 614 and an outlet port 616.

Referring to Figure 6b, which is a top-down cross-section view of the valve 600, where the cross-section plane bisects the thermal actuators, the valve 600 has 8 inlet flow chambers 618 on one side of each thermal actuator 602, 604, into which the inlet fluid flows from the inlet ports 614. The four inlet flow chambers on the left hand side in Figure 6b are open to a first flow combination channel 620, and the four inlet flow chambers on the right hand side of Figure 6b are open to a second flow combination channel 622. The first and second flow combination channels 620, 622 combine in the main flow combination channel 624. The main flow combination channel 624 is open to a first flow distribution channel 626 and a second flow distribution channel 628, both of which are open to 8 outlet flow chambers 630, which are positioned around one side of the thermal actuators 602, 604, opposite the 8 inlet flow chambers 618.

Referring to Figure 6c, which is a bottom-up cross-section view of the valve 600 with the cross section plane just below the valve lid 612, each of the 8 outlet flow chambers flow chambers 630 from Figure 6b is open to an outlet flow opening 632, where the 4 outlet flow openings on the left hand side of Figure 6c are open to a first outlet flow channel 634, and the 4 outlet flow openings on the right hand side of Figure 6c are open to a second outlet flow channel 636. Both outlet flow channels 634 and 636 are open to the outlet port 616 of the valve 600.

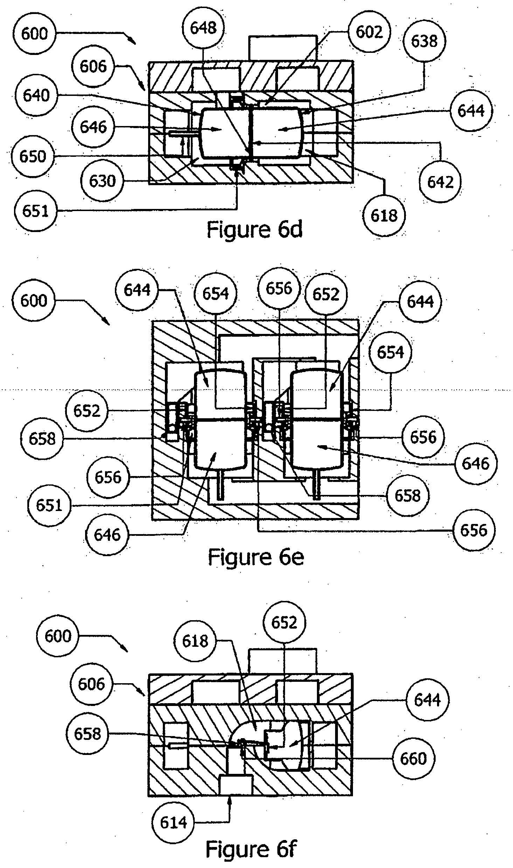

The functioning of the individual thermal actuators 602, 604 will now be explained with reference to Figure 6d to 6f.

Figure 6d shows a side-on cross-section view of the valve 600, where the cross-section plane vertically bisects one of the thermal actuators 602.

The thermal actuator 602 comprises a first cup 638, a second cup 640, and a central disc 642, where the first cup 638 and the central disc 642 form a first container 644, and the second cup 640 and the central disc 642 form a second container 646. In other words, the first and second containers 644, 646 are directly coupled to each other. It will be appreciated that other arrangements are envisaged such as the first container being connected to the second container by virtue of a conduit or the like. The first container 644 and the second container 646 are in fluidal communication with one another via an opening 648 in the bottom section of the central disc 642. The thermal actuator 602 also comprises a filling tube 650 that can be used to fill the thermal actuator 602 with fluid and that is arranged to be closable after filling.

The thermal actuator 602 is filled with a working fluid such as the fluid 112 so that the thermal actuator is partly filled with the liquid component 114 and partly with the gaseous component 116. In use, an inlet fluid flow entering the inlet flow chamber 618 flows around the first container 644, which as a result will be at, or close to, a temperature of the inlet fluid flow, and the outlet fluid flow entering the outlet flow chamber 630 flows around the second container 646, which as a result will be at, or close to, a temperature of the outlet fluid flow.

A quantity of the liquid component 114 inside the thermal actuator 602 will flow from the first container 644 to the second container 646, or vice versa, depending on the temperature difference and the level difference between the first and second containers 644, 646 as explained with reference to the thermal actuator 100; 200; 202 of Figures 1 and 2 which will result in an altered mass distribution of the fluid 112 within thermal actuator 602.

To prevent fluid flowing from the inlet flow chamber 618 directly to the outlet flow chamber 630, the thermal actuator comprises a flexible collar 651, which is also attached to the valve housing 606.

Figure 6e shows a bottom-up cross section view of a portion of the valve 600, where the cross section plane horizontally bisect the thermal actuators 602.

The thermal actuator 602 comprises a first suspension bracket 652 and a second suspension bracket 654, both of which are coupled to a pivot pin 656, which is attached to the valve housing 606, and the first suspension bracket also comprises a flow regulator 658.

Figure 6f shows a side-on cross-section view of the valve 600, where the cross-section plane vertically bisects one of the inlet ports 614 on the left hand side of the valve 600, as seen in Figure 6a.

The valve housing 606 comprises an orifice 660, through which the inlet flow through inlet port 614 flows, before flowing into the inlet flow chamber 618. The flow regulator 658 is positioned so that the flow through the orifice 660 is obstructed by the flow regulator 658, and that the amount of obstruction changes with the position of the thermal actuator 602.

The thermal actuator 602 can tilt around the axis of the pivot pins 656 in response to force being exerted on it, and move the flow regulator 658 closer to, or away from, the orifice 660. The mass distribution on the liquid 112 within the thermal actuator 602 can generate force in both directions, while the pressure drop of the inlet fluid as it passes the flow regulator 658 exerts a force pushing the flow regulator 658 away from the orifice 660. The flexible collar 651 exerts a force on the thermal actuator 602 when the actuator is not in the neutral position of Figures 6a to 6f, and the force exerted by the flexible collar 651 on the thermal actuator 602 is in the direction of the neutral position of thermal actuator.

The inlet flow enters the valve 600 through an inlet port 614, passes through orifice 660 to flow into the inlet flow chamber 618, then into the first flow combination channel 620, the main flow combination channel 624, the first flow distribution channel 626, and into the outlet flow chamber 630. When the flow reaches the outlet flow chamber, it will have mixed with the inlet flow from the other inlet ports 614, and the temperature in the outlet flow chamber is the outlet flow temperature of the valve 600.

When the temperature of the inlet flow through one inlet port 614 becomes higher than the outlet flow of the valve 600, the temperature inside the inlet flow chamber 618 associated with that inlet port 614 will become higher than the temperature of the corresponding outlet flow chamber 630, and as a result the temperature inside the first container 644 will become higher than the temperature inside the second container 646. This temperature difference will cause the liquid component 114 inside the thermal actuator 602 to transfer from the first container to the second container, which will exert an upward force on the thermal actuator 602 on the side of the first container 644, which will move the flow regulator 658 closer to the orifice 660, increasing the pressure drop the inlet flow experiences. The increase in pressure drop will cause the fluid flow to exert more force on the thermal actuator 602, which allows a gradual tilting movement.

In a system where the inlet flow into the inlet ports 614 represent the return flows from multiple parallel heat exchangers that draw heat from the fluid flows, reducing the flow rate of the fluid flow in question will result in a decrease of the temperature of the this fluid flow. This way the movement of the actuator will reduce the temperature difference that was the driving force behind the movement of the thermal actuator, creating a negative feedback loop which allows the actuator to be stable in an intermediate position. When the thermal actuator 602 is stable in an intermediate position, the temperature difference between the first container 644 and the second container 646 will correspond to the level difference of the liquid component 114, between the first container 644 and the second container 646, as explained with reference to Figures 1 and 2.

When the temperature of the inlet flow through one inlet port 614 becomes lower than the outlet flow of the valve 600, the temperature inside the inlet flow chamber 618 associated with that inlet port 614 will become lower than the temperature of the corresponding outlet flow chamber 630, and as a result the temperature inside the first container 644 will become lower than the temperature inside the second container 646. This temperature difference will cause the liquid component 114 inside the thermal actuator 602 to transfer from the second container 646 to the first container 644, which will exert a downward force on the thermal actuator 602 on the side of the first container 644, which will move the flow regulator 658 away from the orifice 660, decreasing the pressure drop the inlet flow experiences. The decrease in pressure drop will cause the fluid flow to exert less force on the thermal actuator 602, which allows a gradual tilting movement, and when the first container moves to a position lower than its neutral position, the deformation of the flexible collar 651 will exert a force on the thermal actuator 602 that pushes the flow regulator towards the orifice 660, also helping to create a gradual tilting movement of the thermal actuator 602.

In a system where the inlet flow into the inlet ports 614 represent the return flows from multiple parallel heat exchangers that draw heat from the fluid flows, increasing the flow rate of the fluid flow in question will result in an increase of the temperature of the this fluid flow. This way the movement of the actuator will reduce the temperature difference that was the driving force behind the movement of the thermal actuator 602, creating a negative feedback loop which allows the thermal actuator 602 to be stable in an intermediate position. When the thermal actuator 602 is stable in an intermediate position, the temperature difference between the first container 644 and the second container 646 will correspond to the level difference of the liquid component 114, between the first container 644 and the second container 646, as explained with reference to Figures 1 and 2.

In order to create a stable regulation system, the rate at which the thermal actuators 602, 604 tilt, as a function of temperature difference, should be proportional to the rate with which the temperature of the inlet fluid flows can respond to a change in flow rate. The speed with which the thermal actuators 602, 604 move, as a function of temperature difference, can be tailored in many ways, for example through the choice of fluid 112 (relationship between vapour pressure and temperature, liquid viscosity), the volume of the first and second containers 644, 646, and the size of the opening 648.

In a system where the inlet fluid flows represent the return flows from parallel heat exchangers that draw heat from the fluid flows, the valve 600 regulates the inlet fluid flow based on temperature difference relative to the combined outlet flow, so as to keep their respective temperatures at approximately the same level. The regulation action occurs by creating a difference in pressure drop between the multiple inlet fluid flows, which occurs as the thermal actuators 602, 604 tilt and changes the positions of the flow regulators 658. The amount of difference in pressure drop that can be created by the valve 600 depends on a number of design factors, such as the size of first and second containers 644, 646, the amount of liquid component 114 within the thermal actuators 602, 604, the position of the flow regulator 658 relative to the dimensions of the thermal actuator 602, 604 (which determines the leverage factor), the size of the orifices 660, and the maximum tilt angle of the thermal actuators 602, 604. The design factors should be tailored so that the difference in pressure drop created by the valve 600 is proportional to the pressure drop within the parallel heat exchanger circuits, within the applicable range of flow rates.

Although the valve 600 can be designed so that enough force is exerted by the thermal actuator 602, 604 to close the orifices 660 completely, if the flow rate of an inlet fluid flow becomes extremely minimal or is entirely blocked, the temperature of that inlet fluid flow will lose its influence on the temperature in the first container 644, and the temperature difference between the first container 644 and the second container 646 will decrease as a result, which will lead to the thermal actuator 602, 604 returning to a less tilted position.

The valve 600 is designed for balancing flows through heat exchangers where heat is drawn from the fluid flow, for example for space heating, but by changing the position of the flow regulator to the other side of the pivot axis, a similar valve for balancing the flow through heat exchangers where heat is transferred to the fluid flow, for example for space cooling, can be created. The change in position of the flow regulator to change the regulation action of the valve is explained with reference to Figures 3 and 4.

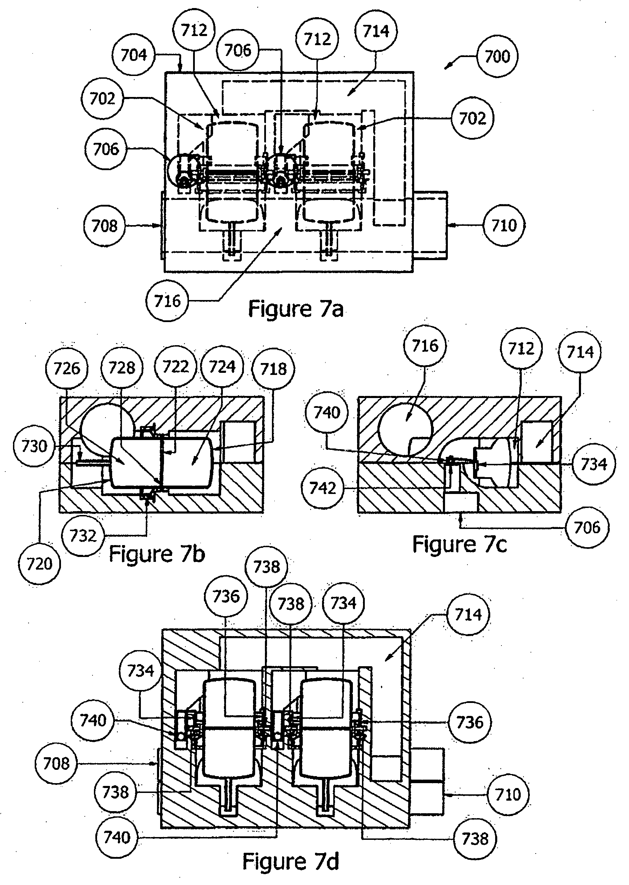

Another embodiment of the present invention is a balancing valve 700, shown in Figure 7a to 7d, which balances the flow of one or more heat exchangers by comparing the return flow temperature of the heat exchanger to the temperature of a different fluid flow. The valve 700 is a four port valve that can balance up to two heat exchangers, but the design may be adjusted to balance any number of heat exchangers in a single valve (including just one heat exchanger).

With reference to Figure 7a, which shows a bottom-up view of the valve 700, the valve 700 comprises two thermal actuators 702 and a valve housing 704, where the valve housing comprises two inlet ports 706 to receive the flow to be balanced, a reference inlet port 708 through which the fluid that acts as a temperature reference can enter the valve 700, and an outlet port 710 through which the combined fluid flows can exit the valve 700.

The valve housing 704 comprises two inlet flow chambers 712 around one side of the thermal actuators 702, through which the inlet flows will pass, before flowing into the inlet flow channel 714. The reference flow enters the valve 700 through reference inlet port 708, and flows through the reference flow channel 716 which flows around one side of the thermal actuators 702, opposite the side of the inlet flow chambers 712. The inlet flow channel 714 flows into the reference flow channel 716 after the reference flow has passed the thermal actuators 702 in the valve 700, just before the outlet port 710.

The functioning of the individual thermal actuators 702 will now be explained with reference to Figure 7b and 7c.

Figure 7b shows a side-on cross-section view of the valve 700, where the cross-section plane vertically bisects one of the thermal actuators 702.

The thermal actuator 702 comprises a first cup 718, a second cup 720, and a central disc 722, where the first cup 718 and the central disc 722 form a first container 724, and the second cup 720 and the central disc 722 form a second container 726. In other words, the first and second containers 724, 726 are directly coupled to each other. It will be appreciated that other arrangements are envisaged such as the first container being connected to the second container by virtue of a conduit or the like. The first container 724 and the second container 726 are in fluidal communication with one another via an opening 728 in the bottom section of the central disc 722. The actuator 702 also comprises a filling tube 730 that can be used to fill the thermal actuator 702 with fluid and that is arranged to be closable after filling.

The thermal actuator 702 is filled with a working fluid such as the fluid 112 so that the thermal actuator is partly filled with the liquid component 114 and partly with the gaseous component 116. For optimal performance the volume of liquid component 114 should be smaller than the volume of the first and second containers 724, 726.

In use, an inlet fluid flow entering the inlet flow chamber 712 flows around the first container 724, which as a result will be at, or close to, a temperature of the inlet fluid flow, and the reference fluid flow through the reference flow channel 716 flows around the second container 726, which as a result will be at, or close to, a temperature of the reference fluid flow. A quantity of the liquid component 114 inside the thermal actuator 702 will flow from the first container 724 to the second container 726, or vice versa, depending on the temperature difference and the level difference between the first and second containers 724, 726 as explained with reference to the thermal actuator 100; 200; 202 of Figures 1 and 2 which will result in an altered mass distribution of the fluid 112 within thermal actuator 702.

To prevent fluid flowing from the inlet flow chamber 712 directly to the reference flow channel 716, the thermal actuator comprises a flexible collar 732, which is also attached to the valve housing 704.

Figure 7c shows a side-on cross-section view of the valve 700, where the cross-section plane vertically bisects one of the inlet ports 706.

Figure 7d shows a bottom-up cross section view of the valve 700, where the cross section plane horizontally bisect the thermal actuators 702.

The thermal actuator 702 comprises a first suspension bracket 734 and a second suspension bracket 736, both of which are coupled to a pivot pin 738, which is attached to the valve housing 704, and the first suspension bracket also comprises a flow regulator 740.

The valve housing 704 comprises an orifice 742 for each inlet port 706, through which the inlet flow through inlet port 706 flows, before flowing into the inlet flow chamber 712. The flow regulator 740 is positioned so that the flow through the orifice 742 is obstructed by the flow regulator 740, and that the amount of obstruction changes with the position of the thermal actuator 702.

The thermal actuator 702 can tilt around the axis of the pivot pins 738 in response to force being exerted on it, and move the flow regulator 740 closer to, or away from, the orifice 742. The mass distribution of the liquid component 114 within the thermal actuator 702 can generate force in both directions, while the pressure drop of the inlet fluid as it passes the flow regulator 740 exerts a force pushing the flow regulator 740 away from the orifice 742. The flexible collar 732 exerts a force on the thermal actuator 702 when the actuator is not in the neutral position of Figures 7a to 7d, and the force exerted by the flexible collar 732 on the thermal actuator 702 is in the direction of the neutral position of the thermal actuator.

The inlet flow enters the valve 700 through an inlet port 706, passes through orifice 742 to flow into the inlet flow chamber 712, then into the inlet flow channel 714, which joins the reference flow channel 716 just before the valve outlet 710.

When the temperature of the inlet flow through one inlet port 706 becomes higher than the reference flow of the valve 700, the temperature inside the inlet flow chamber 712 associated with that inlet port will become higher than the temperature of the reference flow, and as a result the temperature inside the first container 724 will become higher than the temperature inside the second container 726. This temperature difference will cause the liquid component 114 inside the thermal actuator 702 to transfer from the first container to the second container, which will exert an upward force on the thermal actuator on the side of the first container 724, which will move the flow regulator 740 closer to the orifice 742, increasing the pressure drop the inlet flow experiences. The increase in pressure drop will cause the fluid flow to exert more force on the thermal actuator 602, which allows a gradual tilting movement.

In a system where the inlet flow into the inlet ports 706 represent the return flows from a heat exchanger that draws heat from the fluid flows, reducing the flow rate of the fluid flow in question will result in a decrease of the temperature of the this fluid flow. This way the movement of the actuator will reduce the temperature difference that was the driving force behind the movement of the actuator, creating a negative feedback loop which allows the actuator to be stable in an intermediate position. When the thermal actuator 702 is stable in an intermediate position, the temperature difference between the first container 724 and the second container 726 will correspond to the level difference of the liquid component 114, between the first container 724 and the second container 726, as explained with reference to Figures 1 and 2.

When the temperature of the inlet flow through one inlet port 706 becomes lower than the temperature of the reference flow of the valve 700, the temperature inside the inlet flow chamber 712 associated with that inlet port will become lower than the temperature of the reference flow, and as a result the temperature inside the first container 724 will become lower than the temperature inside the second container 726. This temperature difference will cause the liquid component 114 inside the thermal actuator 702 to transfer from the second container 726 to the first container 724, which will exert a downward force on the thermal actuator 702 on the side of the first container 724, which will move the flow regulator 740 away from the orifice 742, decreasing the pressure drop the inlet flow experiences. The decrease in pressure drop will cause the fluid flow to exert less force on the thermal actuator 702, which allows a gradual tilting movement, and when the first container 724 moves to a position lower than its neutral position, the deformation of the flexible collar 732 will exert a force on the thermal actuator 702 that pushes the flow regulator towards the orifice 742, also helping to create a gradual tilting movement of the thermal actuator 702.

In a system where the inlet flow into the inlet port 714 represent the return flow from a heat exchanger that draws heat from the fluid flows, increasing the flow rate of the fluid flow in question will result in an increase of the temperature of the this fluid flow. This way the movement of the thermal actuator 702 will reduce the temperature difference that was the driving force behind the movement of the thermal actuator 702, creating a negative feedback loop which allows the actuator to be stable in an intermediate position. When the thermal actuator 702 is stable in an intermediate position, the temperature difference between the first container 724 and the second container 726 will correspond to the level difference of the liquid component 114, between the first container 724 and the second container 726, as explained with reference to Figures 1 and 2.

In a system where the inlet fluid flows represent the return flows from parallel heat exchangers that draw heat from the fluid flows, the valve 700 regulates the inlet fluid flow based on temperature difference relative to the reference flow, so as to keep the temperature of the inlet flow as close to the temperature of the reference flow. The regulation action occurs by varying the pressure drop that the inlet fluid flows experience, which occurs as the thermal actuators 702 tilt and change the positions of the flow regulators 740. The degree of variation in pressure drop that can be created by the valve 700 depends on a number of design factors, such as the size of first and second containers 724, 726, the amount of liquid component 114 within the thermal actuators 702, the position of the flow regulator 740 relative to the dimensions of the thermal actuator (which determines the leverage factor) the size of the orifices 742, and the maximum tilt angle of the thermal actuators 702. The design factors should be tailored so that the difference in pressure drop created by the valve 700 is proportional to the pressure drop within the parallel heat exchanger circuits, within the applicable range of flow rates.

The valve 700 is designed for balancing flows through heat exchangers where heat is drawn from the fluid flow, for example for space heating, but by changing the position of the flow regulator to the other side of the pivot axis, a similar valve for balancing the flow through heat exchangers where heat is transferred to the fluid flow, for example for space cooling, can be created. The change in position of the flow regulator to change the regulation action of the valve is explained with reference to Figures 3 and 4.

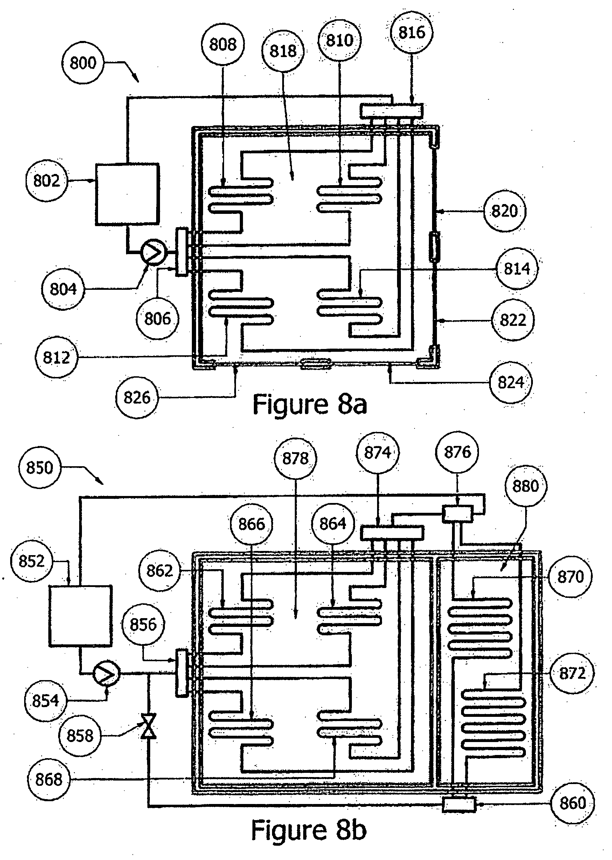

Figure 8a and 8b are schematic drawings of applications of valves of the type described in Figure 6a to 6f and Figures 7a to 7d, in space heating applications.

Figure 8a is a schematic drawing of an example of a space heating system 800, which shows how the regulation action of a valve 600 of the type exemplarily described in Figures 6a to 6f can compensate for varying circumstances likely to be encountered in a typical space heating system.

Figure 8a depicts a domestic space heating system 800, comprising a heat source 802, a pump 804, a flow manifold 806, a first heat exchanger 808, a second heat exchanger 810, a third heat exchanger 812, a fourth heat exchanger 814, and a multiport balancing valve 816. The multiport balancing valve 816 differs from the valve 600 described in Figures 6a to 6f in that the multiport balancing valve 816 has four inlets. The flow manifold 806 may or may not be fitted with adjustable valves to compensate for different heating tube lengths of the heat exchangers 808, 810, 812, 814.

The four heat exchangers 808, 810, 812, 814 are positioned in a substantially square space 818 with a first window 820, a second window 822, a third window 824 and a fourth window 826. The second heat exchanger 810 is in direct proximity to the first window 820, the third heat exchanger 812 is in direct proximity to the fourth window 826 and the fourth heat exchanger 814 is in direct proximity to both the second window 822 and the third window 824. The heat conductivity of the windows is taken to be significantly higher than the heat conductivity of the walls for this example. Sunlight can shine into the room through the third window 824 and the fourth window 826 during the morning, and the heat contribution of the sunlight exceeds the heat loss contribution of the windows in this example.

In this example the flow coefficient of all four heat exchangers 808, 810, 812, 814 is equal, and the pump is controlled to pump a constant total flow rate.

The following is a basic example of the regulating action of the multiport balancing valve 816 during a sunny morning in winter.

During nighttime the pump 804 will be switched off, and it will typically switch on before dawn to start heating the space. As the pump 804 switches on, the temperature of the environment of the heat exchangers 808, 810, 812, 814 will not be the same, since the heat loss during the night depends on the proximity to the windows, so the environment of the first heat exchanger 808 will be relatively warm, and the fourth heat exchanger 814 will be relatively cool.

As the pump switches on, all the thermal actuators inside the multiport balancing valve 816 will be in a neutral position, so the flow rates through all four heat exchangers 808, 810, 812, 814 will start equal. When the fluid from the heat exchangers reaches the multiport balancing valve 816, the thermal actuator associated with the inlet port for the first heat exchanger 808 will observe that the temperature of the inflow is higher than the temperature of the outflow of the valve 816, and the thermal actuator will exert a force on the flow regulator to reduce the flow rate through the first heat exchanger 808, corresponding to its relatively low heat demand. Meanwhile, the thermal actuator associated with the inlet port for the fourth heat exchanger 814 will observe that the temperature of the inflow is lower than the temperature of the outflow of the valve 816, and the thermal actuator will exert a force on the flow regulator to increase the flow rate through the fourth heat exchanger 814, corresponding to its relatively high heat demand. The thermal actuators with the inlet ports for the second and third heat exchangers 810, 812 will not exert a significant force, since the temperature of their inflows is at, or close to, the temperature of the outflow.

As a result of the described action of the multiport balancing valve 816, the flow rate through the fourth heat exchanger 814 will increase, and the flow rate through the first heat exchanger 808 will decrease. Increasing the flow through the fourth heat exchanger 814 will increase the temperature of its return fluid flow, since the fluid will spend less time in the heat exchanger 814, and decreasing the fluid flow through the first heat exchanger 808 will decrease the temperature of its return fluid flow, since the fluid will spend more time in the heat exchanger 808. This feedback reduces the temperature difference that was the driving force of the actuator movement, and allows the multiport balancing valve 816 to perform a stable regulating function.

Over a longer timeframe, the environment of the fourth heat exchanger 814 will heat up quicker than the environment of the second and third heat exchangers 810, 812, due to the higher amount of energy being delivered through the higher flow rate, and the environment of the first heat exchanger 808 will heat up slower than the environment of the second and third heat exchangers 810, 812, due to the lower amount of energy being delivered. This feedback further reduces the temperature difference that was the driving force of the actuators moving to different positions, and so the actuators will move in the direction of their neutral position as the temperature in the space becomes more homogenous.

As the sun comes up it will shine into the space through the third and fourth windows 824, 826, and heat up the environment of the third and fourth heat exchangers 812, 814. The temperature of the return flow of the heat exchangers 812, 814 will start to increase. As the return flow temperature from the third and fourth heat exchangers 812, 814 increases, the thermal actuators associated with the inlet ports of the third and fourth heat exchanger 812, 814 will observe that the temperature of the inflows is becoming higher than the temperature of the outflow of the valve 816, and the thermal actuators will exert a force on the flow regulators to reduce the flow rate through the third and fourth heat exchangers 812, 814, corresponding to their relatively low heat demand. Meanwhile, the thermal actuators associated with the inlet ports for the first and second heat exchangers 808, 810 will observe that the temperature of their inflows is becoming lower than the temperature of the outflow of the valve 816, and the thermal actuator will exert a force on the flow regulator to increase the flow rate through the first and second heat exchanger 808, 810, corresponding to their relatively high heat demand.

This example illustrates how the multiport balancing valve 816 can direct the heating fluid flow to the four heat exchangers in any order of priority depending on the heating demand of the situation.

A system similar to the system of Figure 8a, but for space cooling applications, can be created by using a valve designed for space cooling applications in the position of the multiport balancing valve 816, and a heat sink instead of a heat source in the position 802, as explained with reference to Figures 3, 4 and 5.

Furthermore, a system for both space heating and space cooling can be created by using two multiport balancing valves in a parallel arrangement, each connected to each of the four heat exchangers, where one multiport balancing valve is the type designed for space heating application, and this valve is connected to a heat source, and the other multiport balancing valve is the type designed for space cooling application, and this valve is connected to a heat sink. The system will also contain an electronically controlled switching valve, positioned before the pump, to switch the flow either via the heat source, when heating is required, or via the heat sink, when cooling is required.

Figure 8b is a schematic drawing of an example of a space heating system 850, which shows how a valve 600 of the type exemplarily described in Figures 6a to 6f for space heating systems can be combined with a valve 700 of the type exemplarily described in Figures 7a to 7d for space heating systems, where the outlet flow of the valve 600 is the reference flow used for the valve 700.

Figure 8b depicts a space heating system 850, comprising a heat source 852, a pump 854, a first flow manifold 856, a zone valve 858, a second flow manifold 860, a first heat exchanger 862, a second heat exchanger 864, a third heat exchanger 866, a fourth heat exchanger 868, a fifth heat exchanger 870, a sixth heat exchanger 872, a multiport balancing valve 874, and a referenced balancing valve 876. The multiport balancing valve 874 is almost identical to the valve 600 described in Figures 6a to 6f, except that the multiport balancing valve 874 has four inlets. The reference balancing valve 876 is substantially identical to the valve 700 of Figures 7a to 7d. The first and second flow manifolds 856, 860 may or may not be fitted with adjustable flow setting valves to compensate for different heating tube lengths of the heat exchangers 862, 864, 866, 868, 870, 872.

The first, second, third and fourth heat exchangers 862, 864, 866, 868 are positioned in a primary space 878 and the fifth and sixth heat exchangers 870, 872 are positioned in a secondary space 880. The pump 854 is controlled based on the temperature in the primary space 878, using a thermostat controller, and the zone valve 858 is controlled based on the temperature in the secondary space, using a thermostat controller. So the pump can supply heating fluid to just the heat exchangers in the primary space 878, or to both the primary space 878 and the secondary space 880.

When the pump only supplies heating fluid to the primary space 878, the multiport balancing valve 874 will balance the fluid flows to the four heat exchangers 862, 864, 866, 868 so that heating fluid is directed proportionally to heating demand, as described with reference to Figure 8a. When the pump also supplies heating fluid to the two heat exchangers 870, 872 in the secondary space 880, the flow through these two heat exchangers will be regulated by the referenced balancing valve 876, based on their temperature relative to the reference flow, which is the outflow from the multiport balancing valve 874.

For example, if the return flow from the fifth and sixth heat exchangers 870, 872 becomes lower in temperature than the reference flow temperature, the thermal actuators of the reference balancing valve 876, associated with the inlet ports for the fifth and sixth heat exchangers 870, 872 will observe that the temperature of their inflows is becoming lower than the temperature of the reference flow, and the thermal actuators will exert a force on the flow regulator to increase the flow rate through the fifth and sixth heat exchanger 870, 872, corresponding to their relatively high heat demand.

This change in temperature of the return flow of the fifth and sixth heat exchangers does not, however, directly influence the regulation action of the multiport balancing valve 874. In particular if the pump 854 is regulated to provide a constant pressure head, the flow through the heat exchangers in the primary space 878 will not be affected by a change in the flow rate through the heat exchangers in the secondary space 880.

This arrangement prevents the heating performance of the primary space 878 from being disturbed by the intermittent heating requirement of the secondary space 880; if all the heat exchangers were connected to a multiport balancing valve, in which case it would have six inlet ports, an increase in the thermostat set-point temperature of the secondary space 880 would divert a large portion of the heat supply to the secondary space 880, which could cause the primary space 878 to cool down significantly. By using the referenced balancing valve 876 for the heat exchangers form the secondary space 880, the primary space 878 is not affected in this scenario of change of the thermostat settings of the secondary space 880, but still creates a system where the flows from the fifth and sixth heat exchangers 870, 872 are in balance with the first, second, third and fourth heat exchangers 862, 864, 866, 868 in normal operation.

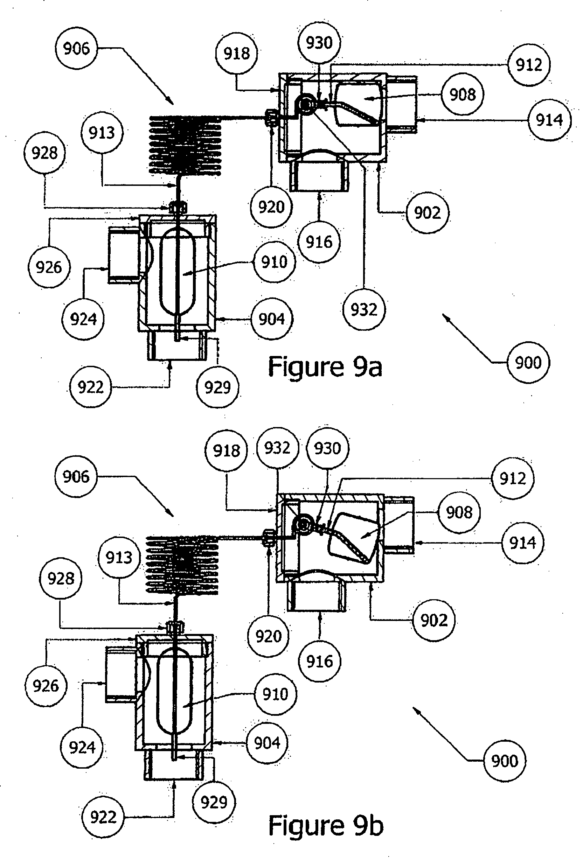

Another example of a valve 900 comprising an actuator in accordance with embodiments of this invention is shown in Figures 9a and 9b, which are front-on cross-section views of the valve 900, where the cross-section plane bisects the valve 900 and the actuator. The valve 900 is a 2-way flow regulation valve with an external sensor in a separate housing, which can be used to regulate the flow on the secondary side of a heat exchanger, with the external sensor installed within the flow on the primary side of the heat exchanger.

It should be noted that the external sensor of the valve 900 does not require a separate housing through which a fluid can flow, but can also, for example, be installed into a vessel containing fluid.

The valve 900 comprises a valve housing 902, a sensor housing 904, and an actuator 906, where the actuator 906 comprises a first container 908, positioned within the valve housing 902, a second container 910, positioned within the sensor housing 904, a rigid tube 912, and a flexible tube 913. The valve housing 902 comprises an inlet port 914, an outlet port 916, and a cap section 918 with a connecting port 920 through which the flexible tube 913 can enter the valve housing 902. The sensor housing 904 comprises an inlet port 922, an outlet port 924, and a cap section 926 with a connecting port 928 through which the flexible tube 913 can enter the sensor housing 904. The actuator 906 also comprises a filling tube 929, which is closeable after filling.

The rigid tube 912 is attached to the first container 908 and a suspension bracket 930, where the suspension bracket 930 is coupled to a pivot pin 932, which is attached to the valve housing 902, so that the first container 908 can move relative to the valve housing 902, pivoting around the position of the pivot pin 932. The flexible tube 913 is attached to the rigid tube 912, and is coiled around the position of the pivot pin 932, so as to provide a controlled amount of resistance to movement of the first container 908.

The first container 908 can act as flow regulator by partially blocking the inlet fluid flow through inlet port 914, where the surface of the first container 908 that faces the inlet port 914 is shaped as a section of a sphere, with the center point of the sphere positioned in the middle of the pivot axis. The valve housing 902, around the inlet port 914, is formed in the shape of a section of a sphere, also with the center point of the sphere positioned in the middle of the pivot axis, so that a constant gap is maintained between the first container 908 and the valve housing 902 directly around the inlet port 914, as the first container 908 pivots around the position of the pivot pin 932, which allows the gap to be relatively small.

The thermal actuator 906 is filled with a fluid such as the fluid 112 such that the thermal actuator 906 is partly filled with the liquid component 114 and partly with the gaseous component 116. In use, a first fluid flow entering the valve housing 902 through the inlet port 914 flows around the first container 908, which as a result will be at, or close to, a temperature of the first fluid flow, and a second fluid flow entering the sensor housing 904 through the inlet port 922 flows around the second container 910, which as a result will be at, or close to, a temperature of the second fluid flow.

The liquid component 114 inside the thermal actuator 906 will flow from the first container 908 to the second container 910, or vice versa, depending on the change in temperature difference and the level difference between the first and second containers 908, 910 as explained with reference to the thermal actuator 100 of Figure 2.

Figure 9a depicts the situation where the first container 908 is maximally blocking the inlet port 914 of the valve housing 902. In this situation the first container 908 is in the highest possible position, which means its submerged mass is at or near the lowest point, which means the first container 908 is completely, or for a large part, filled with the gaseous component 116, and that the liquid component is completely, or for a large part in the second container 910. This is the situation when the temperature in the second container 910 is lower than the temperature in the first container 908, and also when the temperature in the first and second containers 908, 910 is the same, since the second container 910 is at a lower level than the first container 908.

As the temperature in the second container 910 increases to beyond the temperature of the first container 908, at a certain degree of temperature difference the liquid component 114 will start to transfer from the second container 910 to the first container 908 (as explained with reference to Figure 2). As the liquid component 114 transfers to the first container 908, its submerged mass will increase, and the force of gravity will increasingly pull the first container 908 in a downward direction, opening up the flow path through the inlet port 914. The increased pull of gravity, as the amount of liquid component 114 in the first container 908 increases, is counteracted by the spring-like action of the coiled flexible tube 913, thereby creating a smooth and gradual motion, where the degree of opening of inlet port 914 may be proportional to the amount of liquid component 114 in the first container 914 when the counteracting force contributions of the coil in the flexible tube 913 and the gravity pull on the first container 908 are well balanced.

Figure 9b depicts the situation where the first container 908 has moved approximately halfway through its maximum trajectory, and the inlet port 914 is approximately 50% obstructed, which in a properly designed valve will correspond to about 50% of the liquid component 114 being present in the first container 908.

The position of Figure 9b is stable when a feedback exists between the amount of temperature difference between the first and second containers 908, 910, and the degree of opening of the inlet port 914, where an increase in the opening of inlet port 914 leads to a decreases in the temperature difference between the first and second containers 908, 910.

If the change in temperature difference driving the transfer of the liquid component 114 persists despite the feedback, the first container 908 will eventually move to its bottom position where the inlet 914 is minimally blocked.

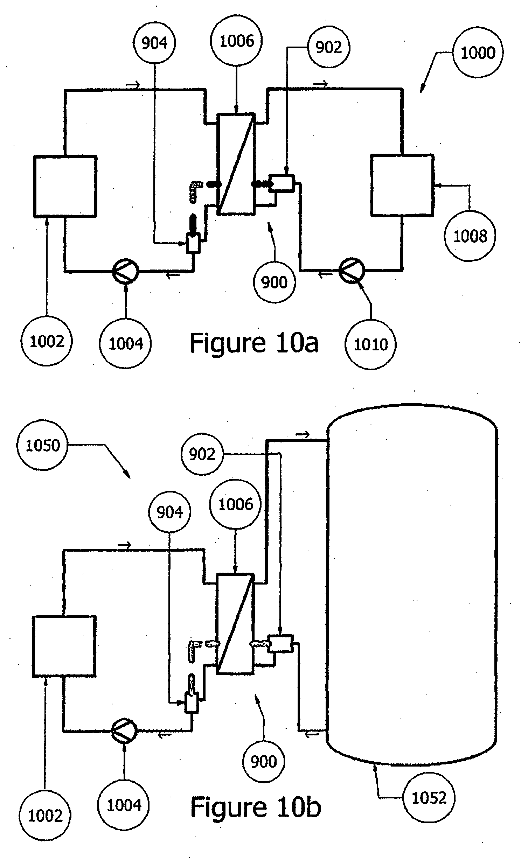

Figure 10a is a schematic drawing of a counter-flow heat exchange system 1000, where the valve 900 is used to control the flow rate through the secondary side of the heat exchanger. The counter-flow heat exchange system 1000 comprises a heat source 1002 and a first pump 1004 on the primary side of the heat exchanger 1006, and a heat sink 1008 and a second pump 1010 on the secondary side of the heat exchanger 1006. The system 1000 also comprises a valve 900 installed at the bottom end of the heat exchanger, with the valve housing 902 installed on the secondary side of the heat exchanger 1006, and the sensor housing 904 installed on the primary side of the heat exchanger 1006. The grey dashed line indicates the flexible tube 913 between the valve housing 902 and the sensor housing 904.

For optimal performance of a counter-flow heat exchanger, the heat capacity rate, defined as the flow rate multiplied by the heat capacity of the fluid, should be the same on the primary and secondary side of the heat exchanger. In this example the heat capacity of the fluids is assumed to be equal, so the flow rate should be equal for optimal performance.

When the first and second pumps 1004, 1010 are off, the valve 1000 will be in the position described with reference to Figure 9a, where the fluid flow on the secondary side is maximally obstructed by the valve 900. When the pumps 1004, 1010 are switched on, the flow rate on the primary side of the heat exchanger 1006 will be higher than the flow rate on the secondary side of the heat exchanger 1006, since the secondary side is maximally obstructed. Due to the higher flow rate on the primary side, the fluid that flows from the heat exchanger 1006 to the sensor housing 904 will be significantly higher in temperature than the fluid that flows from the heat sink 1008 into the valve housing 902. This change in temperature difference will cause the valve 900 to move to a position similar to the one described in Figure 9b, which will increase the flow rate on the secondary side, which in turn will decrease the temperature difference. This feedback in temperature difference as the flow rate is adjusted allows the valve 900 to provide a stable regulation.

The valve 900 will regulate the flow to the situation where the temperature difference between the fluid passing through the valve housing 902 and the sensor housing 904 is the same as the temperature difference represented by the level difference between the liquid component 114 inside the first container 908, and the liquid component 114 inside the second container 910, as explained with reference to Figure 9 and Figure 2.

By choosing the level difference so that the temperature difference at which the valve stabilizes is typical for the type of heat exchanger used and the typical heat capacity rate in the system, a system can be created where the heat capacity rate on the secondary side is regulated by the valve 000 to be very close to the heat capacity rate on the primary side.

Figure 10b depicts a counter-flow heat exchange system 1050, where the valve 900 is used to control the flow rate through the secondary side of the heat exchanger. The difference with Figure 10a is that the secondary side is a natural convection loop, which is driven by the density difference between the relatively cool fluid inside the storage tank 1052, and the relatively warm fluid inside the heat exchanger 1006 and the connection tube from the heat exchanger to the storage tank 1052.

When the first pump 1004 is off, the valve 900 will be in the position described with reference to Figure 9a, where the flow on the secondary side is maximally obstructed by the valve 900. When the pump 1004 is switched on, the flow on the primary side of the heat exchanger 1006 will start, but since the secondary side of the heat exchanger 1006 is maximally obstructed, the natural convection flow on the secondary side will be extremely slow. Due to the higher flow rate on the primary side, the fluid that flows from the heat exchanger 1006 to the sensor housing 904 will be significantly higher in temperature than the fluid that flows from the storage tank 1052 into the valve housing 902. This change in temperature difference will cause the valve 900 to move to a position similar to the one described in Figure 9b, which will increase the flow rate on the secondary side, which in turn will decrease the temperature difference. This feedback in temperature difference as the flow rate is adjusted allows the valve 900 to provide a stable regulation.

The valve 900 will regulate the flow to the situation where the temperature difference between the fluid passing through the valve housing 902 and the sensor housing 904 is the same as the temperature difference represented by the level difference between the liquid component 114 inside the first container 908, and the liquid component 114 inside the second container 910, as explained with reference to Figure 9 and Figure 2.

By choosing the level difference so that the temperature difference at which the valve 900 stabilizes is typical for the type of heat exchanger used and the typical heat capacity rate in the system, a system can be created where the heat capacity rate on the secondary side is regulated by the valve 900 to be very close to the heat capacity rate on the primary side.

Typical conventional natural convection heat exchanger systems have a highly variable flow rate on the secondary side, even with a constant flow rate on the primary side, since the pressure head that drives the natural convection flow depends on the temperature in the heat exchanger, and the temperature profile in the storage tank, which are typically variable, especially when the heat source is a solar thermal collector. Using the valve 900 to regulate the flow rate on the secondary side so that the heat capacity rate is matched with the primary side leads to an improved performance of system 1050.

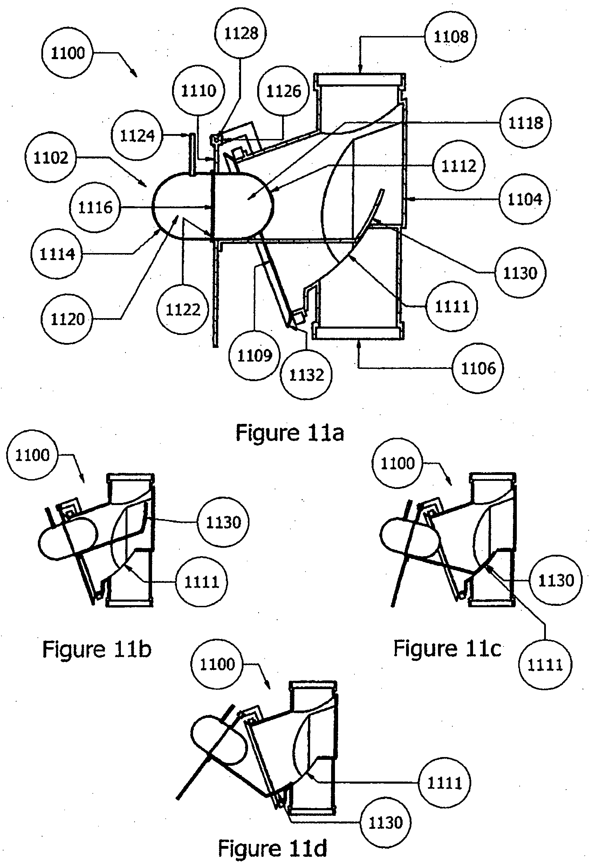

Another example of a valve 1100 comprising an actuator in accordance with embodiments of this invention is shown in Figures 11a to 11d. The valve 1100 is intended to regulate and direct the fluid flow coming from a heat exchanger, where the fluid flow through the heat exchanger and the valve is driven by natural convection, where the valve 1100 is positioned inside a vessel containing the fluid that flows through the heat exchanger and the valve 1100.

Figure 11a shows a side-on cross-section view of the valve 1100, where the cross-section plane vertically bisects the valve 1100 and the thermal actuator 1102.

The valve 1100 comprises a thermal actuator 1102 and valve housing 1104, where the valve housing comprises an inlet port 1106, a bypass outlet port 1108, and a vessel outlet port 1109. The valve 1100 also comprises a suspension bracket 1110, to which the actuator 1102 is attached, and a flow regulation opening 1111, through which the inlet flow through inlet port 1106 must flow.

The thermal actuator 1102 comprises a first cup 1112, a second cup 1114, and a central disc 1116, where the first cup 1112 and the central disc 1116 form a first container 1118, and the second cup 1114 and the central disc 1116 form a second container 1120. The first container 1118 and the second container 1120 are in fluidal communication with one another via an opening 1122 in the bottom section of the central disc 1116. The actuator 1102 also comprises a filling tube 1124 that can be used to fill the thermal actuator 1102 with fluid and that is arranged to be closable after filling.

The suspension bracket 1110 extends above the actuator 1102 to form a suspension joint 1126, which is coupled to a pivot pin 1128, where pivot pin 1128 is connected to valve housing 1104.

The suspension bracket 1110 comprises flow regulator 1130, which is positioned close to the curved section of the valve house 1104, in which the flow regulation opening 1111 is located. As the suspension bracket 1110 pivots around the pivot pin 1128, the flow regulator 1130 moves along the curved flow regulation opening 1111, without being in contact with the valve housing 1104, and can obstruct the fluid flow entering the valve 1100 through the flow regulation opening 1111. The suspension bracket 1110 can also pivot to a position where it obstructs the flow through the vessel outlet port 1109. The vessel outlet port 1109 is fitted with a flexible ring 1132, for example a v-ring, so that the vessel outlet port 1109 is completely sealed, or sealed to a high degree, when the suspension bracket 1110 closes against the vessel outlet port 1109.

The thermal actuator 1102 is filled with a fluid such as the fluid 112 such that the thermal actuator 1102 is partly filled with the liquid component 114 and partly with the gaseous component 116. In use, a fluid flow entering through the inlet port 1106 flows around the first container 1118, which as a result will be at, or close to, a temperature of the fluid flow, and the second container 1120 is exposed to the fluid in the vessel, surrounding the valve 1100, which as a result will be at, or close to, a temperature of the surrounding fluid in the vessel, at the position of the valve 1100.

The liquid component 114 inside the thermal actuator 1102 will flow from the first container 1118 to the second container 1120, or vice versa, depending on the temperature difference and the level difference between the first and second containers 1118, 1120 as explained with reference to the thermal actuator 100 of Figures 1 and 2.

The position of the actuator 1102 relative to the valve housing 1104 is governed by the center of gravity of the pivoting components, which are the actuator 1102, including the liquid component 114 and the gaseous component 116 inside the actuator 1102, and the suspension bracket 1110, where the center of gravity is based on the submerged mass of the actuator 1102 and the suspension bracket 1110, within the fluid that runs through and surrounds the valve 1100 (where the submerged mass of the gaseous component 116 is typically negative, and the submerged mass of the liquid component 114 can be positive or negative, depending on the density of liquid component 114 relative to the density of the fluid that runs through and surrounds the valve 1100). The pivoting components will pivot around the axis of pivot pin 1128 so that the center of gravity is positioned straight below the pivot pin 1128.

The center of gravity of the pivoting components can be considered to consist of three parts, firstly the center of gravity of the solid parts of the actuator 1102 and the suspension bracket 1110, which are the first cup 1112, the second cup 1114, the central disc 1116, the filling tube 1124, and the suspension bracket 1110, secondly the center of gravity of the liquid component 114, and thirdly the center of gravity of the gaseous component 116. The center of gravity of the solid parts of the pivoting components is constant relative to the geometry of the pivoting components. The center of gravity of the liquid component 114 and the center of gravity of the gaseous component 116 are not constant relative the geometry of the pivoting components, since the amount of liquid component 114 and gaseous component 116 in each of the containers 1118, 1120 changes, depending on the temperature difference between the containers 1118, 1120. The center of gravity of the liquid component 114 and the center of gravity of the gaseous component 116 can be positioned within the first container 1118, within the second container 1120, or in between, on the central disc 1116.

Since the gaseous component 116 has a negative submerged mass, its center of gravity is actually a center of buoyancy, which has an inverted contribution to the total center of gravity. In the case where the liquid component also has a negative submerged mass, its center of gravity will also be a center of buoyancy, and its contribution to the total center of gravity will also be inverted.

The following descriptions are based on the liquid component 114 having a higher density than the fluid flowing through, and surrounding, the valve 1100, so the liquid component 114 has a positive submerged mass. It is clear though that the functioning of the actuator 1102 will be similar if the liquid component 114 has a negative submerged mass, since its submerged mass will still be higher than the submerged mass of the gaseous component 116. The suspension bracket 1110 in this example is made of a plastic material with a very low submerged mass in the fluid that runs through and surrounds the valve 1100, whereas solid parts of the thermal actuator 1102 are made of metal, so the suspension bracket 1110 has a negligible contribution to the center of gravity of the solid parts of the pivoting components.

Figure 11a represents a neutral actuator position, where the thermal actuator 1102 is positioned straight relative direction of gravity. In this position the suspension bracket 1110 does not obstruct the flow through the second outlet port significantly, and the flow regulator 1130 partly obstructs the flow through the inlet port 1106, by blocking the flow regulation opening 1111 by approximately 30%. In this position, the center of gravity of the actuator 1102 is positioned near the central disc 1116, which means the center of gravity of the liquid component 114 and the center of buoyancy of the gaseous component 116 are also positioned near the central disc 1116, so the level of the liquid component 114 in the first container 1118 and the second container 1120 is approximately equal.

The actuator 1102 is in the neutral position when the temperature in the first container 1118 and in the second container 1120 are the same, which is the case when the temperature of the inlet fluid flow through the inlet port 1106 and the temperature of the fluid surrounding the valve 1100 are the same or when there is no flow through the inlet port 1106.

If the temperature of the inlet fluid flow becomes hotter than the temperature of the fluid surrounding the valve 1100, the first container 1118 will become warmer than the second container 1120, and the liquid component 114 will transfer from the first container 1118 to the second container 1120. The thermal actuator 1102 and the suspension bracket 1110 will tilt to the right, from the viewpoint of Figure 11, which will move the flow regulator 1130 upwards, and reduce the amount of obstruction to the flow regulation opening 1111. This reduction in the obstruction will increase the flow rate through the heat exchanger from which the inlet flow comes, reducing the temperature of the inlet flow, and this way the movement of the actuator 1102 will reduce the temperature difference that was the driving force behind the movement of the actuator 1102.

If the temperature of the inlet flow remains higher when the flow regulator 1130 no longer caused any obstruction, the actuator 1102 and the suspension bracket will continue to tilt and reach the position described in Figure 11b, where the suspension disc completely blocks the vessel outlet 1109, and the inlet flow can only exit the valve 1100 through the bypass outlet 1108. The blocking of the vessel outlet 1109 not only prevents the inlet flow from exiting through the second outlet 1109, but also prevents fluid surrounding the valve 1100 from flowing into the valve 1100, which it is inclined to do if the fluid flowing inside the valve 1100, from inlet port 1106 to the bypass outlet port 1108, is significantly warmer than the fluid surrounding the valve 1100, due to the difference in density between warm and cold fluid.

Going back to the neutral position of Figure 11a, if the temperature of the inlet fluid flow becomes colder than the temperature of the fluid surrounding the valve 1100, the first container 1118 will become colder than the second container 1120, and liquid component 114 will transfer from the second container 1120 to the first container 1118. The thermal actuator 1102 and the suspension bracket 1110 will tilt to the left, as seen from the viewpoint of Figure 11, which will move the flow regulator 1130 downwards, and increase the amount of obstruction to the flow regulation opening 1111. This reduction in the obstruction will decrease the flow rate through the heat exchanger from which the inlet flow comes, increasing the temperature of the inlet flow, and this way the movement of the actuator 1102 will reduce the temperature difference that was the driving force behind the movement of the actuator 1102.

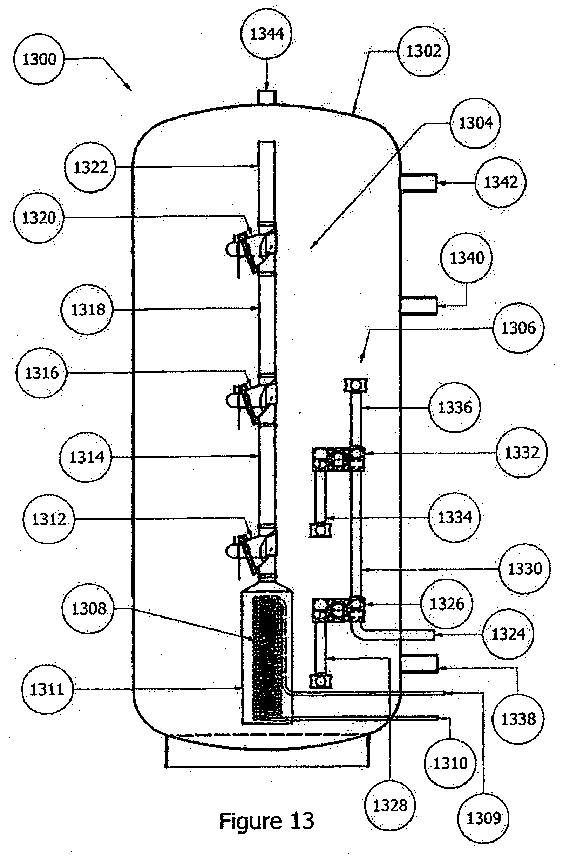

When the actuator 1102 and the suspension bracket 1110 continue to tilt left, they will reach the position of Figure 11c, where the flow regulator 1130 is maximally obstructing the inlet flow, by blocking approximately 80% of the flow regulation opening 1111. If at this stage the temperature of the inlet flow remains lower than temperature of the fluid surrounding the valve 1100, the thermal actuator 1102 and the suspension bracket 1110 will continue to tilt to the left, which will reduce the amount of blockage the flow regulator 1130 creates. This reduction in blockage will increase the flow rate through the heat exchanger, further reducing the temperature of the inlet flow. This positive feedback loop will cause the actuator 1102 and the suspension bracket 1110 to rapidly tilt to the position of Figure 11d, where the flow regulator 1130 does not block the inlet flow. This rapid transition will cause a quick drop in the temperature, the purpose of which will be explained with reference to Figure 13.

To ensure that the actuator reaches at least the position of Figure 11d when all the liquid component 114 is in the first container 1118, various design parameters can be tailored, for example the submerged weight of the solid parts of the actuator 1102, the position of the pivot pin 1128 relative to the center of gravity, the volume of the first and second containers 1118, 1120, and the amount of the fluid 112 used in the actuator, as well as its liquid density.

In an alternative embodiment, the valve 1100 comprises a single outlet port, which is always open to the vessel, where the function of the valve is only to regulate the flow rate through the inlet port.

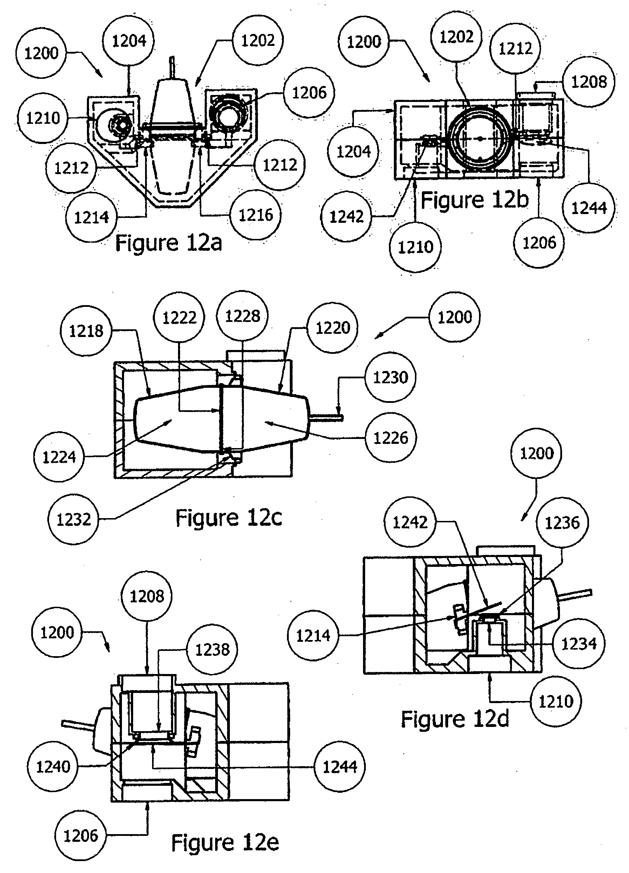

Another example of a valve 1200 comprising an actuator in accordance with embodiments of this invention is shown in Figures 12a to 12e. The valve 1200 is a 3-port switching valve 1200, intended to be positioned within a vessel containing the same fluid that flows through the valve 1200.

Figure 12a shows a bottom-up view of the valve 1200, with hidden lines shown as dashed lines. Figure 12b shows a front-on view of the valve 1200, with hidden lines shown as dashed lines.

The valve 1200 comprises a thermal actuator 1202, and a valve housing 1204, where the valve housing 1204 comprises an inlet port 1206, a bypass outlet port 1208, and a vessel outlet port 1210.

The valve 1200 also comprises two pivot pins 1212 through which the thermal actuator 1202 is coupled to the valve housing 1204, which allow the thermal actuator 1202 to pivot along the axis of the pivot pins 1212 relative to the valve housing 1204. The thermal actuator 1202 comprises a first suspension bracket 1214 and a second suspension bracket 1216 for coupling the thermal actuator 1202 to the pivot pins 1212.

The functioning of the thermal actuator 1202 will now be explained with reference to 12c.

Figure 12c shows a side-on cross-section view of the valve 1200, where the cross-section plane vertically bisects the thermal actuator 1202.

The thermal actuator 1202 comprises a first cup 1218, a second cup 1220, and a central disc 1222, where the first cup 1218 and the central disc 1222 form a first container 1224, and the second cup 1220 and the central disc 1222 form a second container 1226. In other words, the first and second containers 1224, 1226 are directly coupled to each other. It will be appreciated that other arrangements are envisaged such as the first container being connected to the second container by virtue of a conduit or the like.

The first container 1224 and the second container 1226 are in fluidal communication with one another via an opening 1228 in the bottom section of the central disc 1222. The actuator 1202 also comprises a filling tube 1230 that can be used to fill the thermal actuator 1202 with fluid and that is arranged to be closable after filling.

The thermal actuator 1202 is filled with a working fluid such as the fluid 112 so that the thermal actuator is partly filled with the liquid component 114 and partly with the gaseous component 116. In use, an inlet fluid flow entering the valve housing 1204 flows around the first container 1224, which as a result will be at, or close to, a temperature of the inlet fluid flow, and the second container 1226 is exposed to the fluid surrounding the valve 1200, which as a result will be at, or close to, a temperature of the fluid surrounding the valve 1200. A quantity of the liquid component 114 inside the thermal actuator 1202 will flow from the first container 1224 to the second container 1226, or vice versa, depending on the temperature difference and the level difference between the first and second containers 1224, 1226 as explained with reference to the thermal actuator 100; 200; 202 of Figures 1 and 2 which will result in an altered mass distribution of the fluid within thermal actuator 1202.

To prevent fluid flowing from inside the valve housing 1204 directly into the vessel in which the valve 1200 is positioned, the thermal actuator 1202 comprises a flexible collar 1232, which is also attached to the valve housing 1204.

The operation of the valve 1200 in switching the flow will now be described with reference to Figure 12d, which is a side-on cross-section view of the valve 1200 where the cross-section plane bisects the vessel outlet port 1210, and Figure 12e, which is a side-on cross-section of the valve 1200, from the opposite direction as Figure 12d, where the cross-section plane bisects the bypass outlet port 1208, as well as the inlet port 1206.

The valve housing 1204 comprises a first flow opening 1234, through which the flow to the vessel outlet port 1210 must flow, which comprises a first flexible ring 1236 for sealing the opening. The valve housing 1204 also comprises a second flow opening 1238, through which the flow to the bypass outlet port 1208 must flow, which comprises a second flexible ring 1240 for sealing the opening.

The first suspension bracket 1214 comprises a first closure plate 1242 for closing the first flow opening 1234, and the second suspension bracket 1216 comprises a second closure plate 1244 for closing the second flow opening 1238. The first and second flexible rings 1236, 1240 are v-rings in this example.

In the situation of Figures 12d and 12e, the inlet flow through the inlet port 1206 is lower in temperature than the surroundings of the valve 1200, and as a result the temperature in the first container 1224 is lower than the temperature in the second container 1226, and the liquid component 114 will be predominantly located in the first container 1224. This mass-distribution inside the thermal actuator 1202 will push the first container 1224 down and the second container 1226 up, and as a result the first closure plate 1242 will be pushed upwards, resulting in the first flow opening 1234 being open, and the second closure plate 1244 will be pushed upwards, resulting in the second flow opening 1238 being closed, as illustrated in Figures 12d and 12e. So in this case the valve 1200 directs the inlet flow through inlet port 1206 to the vessel outlet port 1210.

If the situation is reverse, with the temperature in the first container 1224 higher than in the second container 1226, due to the inlet flow being higher in temperature than the surroundings of the valve 1200, the valve 1200 will direct the inlet flow through inlet port 1206 to the bypass outlet port 1208.

The valve 1200 should be designed so that actuator 1202 can exert sufficient force to overcome the force exerted by the pressure drop across the first or second closure plate 1242, 1244, when either is in the closed position. Also, the actuator 1202 needs to be able to exert enough force to deform the flexible collar 1232 so that the required tilt to reach the closed position can be achieved. The force exerted by the flexible collar in the direction of the neutral position of Figure 12c will assist to overcome the force exerted by the pressure drop keeping the closure plates in the closed position, so to achieve a high maximum pressure drop for the valve 1200, a flexible collar 1232 with a reasonably high rigidity may be desirable, as long as the rigidity of the flexible collar does not exert a force greater than the maximum force of the actuator 1202, at the maximum tilt angle, in the tilt direction.

The maximum force that can be exerted by the thermal actuator 1202 on the closure plates 1242, 1244 depends on a number of design factors, such as the size of first and second containers 1224, 1226, the amount of liquid component 114 within the thermal actuator 1202, the position of the closure plates 1242, 1244 relative to the dimensions of the thermal actuator 1202 (which determines the leverage factor), and the maximum tilt angle of the thermal actuator 1202.

In the example of Figure 12, the first flow opening 1234 is significantly smaller than the second flow opening 1238, since the pressure drop across the first closure plate 1242, when it is in the closed position, is likely to be significantly higher than the pressure drop across the second closure plate 1244, when it is in the closed position, due to a higher expected pressure drop downstream of the bypass outlet port 1208 compared to the vessel outlet port 1210.

An application of the valve 1200, with reference to Figures 12a to 12f, and the valve 1100, with reference to Figures 11a to 11e, will now be explained with reference to Figure 13.

Figure 13 is a drawing of a heat storage system 1300, comprising a vessel 1302, a natural convection stratified loading device 1304, and a stratified inflow device 1306, where the vessel 1302 is shown in front-on cross-section view, but the devices 1304, 1306 are not shown in cross-section view. Hidden lines are shown as dashed lines.

The following section will describe the functioning of the natural convection stratified loading device 1304.

The natural convection stratified loading device 1304 comprises a heat exchanger 1308, which is a coiled tube with an inlet 1309 and an outlet 1310, and a heat exchanger mantel 1311, where the heat exchanger is positioned inside the mantel, which is open at the bottom so fluid from the bottom of the vessel 1302 can flow into the mantel 1311.

The natural convection stratified loading device 1304 also comprises a first regulation valve 1312, a first connection tube 1314, a second regulation valve 1316, a second connection tube 1318, a third regulation valve 1320, and a top outlet tube 1322, where the second and third regulation valves 1316, 1320 are the same as the valve 1100 with reference to Figure 11, and the first regulation valve 1312 is similar to the valve 1100 from Figure 11, except that the valve 1312 can only tilt between the positions described in Figure 11b and 11c, and therefore cannot tilt beyond the position of Figure 11c to reach the position of Figure 11d.

The mantel 1311 is connected to the inlet port of the first regulation valve 1312, whose bypass outlet port is connected to the inlet port of the second regulation valve 1316 through the first connection tube 1314. The bypass outlet port of the second regulation valve 1316 is connected to the inlet port of the third regulation valve 1320 through the second connection tube 1318, and the bypass outlet port of the third regulation valve is connected to the top outlet tube 1322, which is open to the top of the vessel 1302.

The regulation valves 1312, 1316, 1320 are all shown in their neutral position in Figure 13, which is the case when there is no flow through the natural convection stratified loading device 1304.

A heating fluid will enter the heat exchanger 1308 through the inlet 1309, and exit through the outlet 1310, and will transfer heat to the fluid inside the mantel 1311. When the fluid inside the mantel 1311 becomes warmer than the fluid in the vessel on the outside of the mantel 1311, at the same height, the pressure outside the mantel 1311 will become higher than inside the mantel 1311 due to the density difference of the fluid (assuming that the fluid has a conventional temperature-density relationship, within the applicable temperature range, where density decreases with increasing temperature), and this pressure difference will cause the fluid inside the mantel 1311 to flow upwards, a process known as natural convection.

When the fluid flows from the mantel 1311 into the first regulation valve 1312, the valve 1312 will compare the temperature of the flow through its inlet port to the temperature of the fluid surrounding the valve 1312, as described with reference to Figure 11.

If the fluid flow into the valve 1312 is lower in temperature than the surroundings, the valve 1312 will move from the neutral position of Figure 11a towards the position of Figure 11c, blocking the inflow and reducing the flow rate through the mantel 1311, which will increase the temperature of the flow from the mantel 1311, creating a negative feedback for a stable regulation function. When the valve 1312 reaches the position of Figure 11c, it is mechanically prevented from moving further, so the valve 1312 remains in its position of maximum blockage if the inflow remains lower in temperature than the surroundings of the valve 1312.

If the fluid flow into the valve 1312 is higher in temperature than the surroundings of the valve 1312, it will move towards the position of Figure 11b, which will reduce the blockage, increase the flow rate, and decrease the temperature of the flow from the mantel 1311, creating a negative feedback for a stable regulation function. If the temperature of the inflow remains higher when all the blockage is removed, the valve 1312 will reach the position of Figure 11b, where the vessel outlet port is closed, and the fluid is directed through the bypass outlet port.

When the first regulation valve 1312 is in the position of Figure 11b, the flow from the mantel 1311 is directed through the first connection tube 1314 to the second regulation valve 1316.

If the inflow into the second regulation valve 1316 is lower in temperature than the surroundings of the valve 1316, it will initially respond the same as the first regulation valve 1312, but if the second regulation valve 1316 reaches the position of Figure 11c, and the temperature of the inflow is still lower in temperature, the second regulation valve 1316 will rapidly move toward the position of Figure 11d, as described with reference to Figure 11d. By moving to the position of Figure 11d and removing all blockage of the inlet flow, the flow rate through the mantel 1311 will rapidly increase, and the temperature of the flow through the mantel 1311 will rapidly decrease. As a result, the first regulation valve 1312 will, in most scenarios, observe that the inflow is no longer warmer than its surroundings, and move from the position of Figure 11b back towards the position of Figure 11a, opening its vessel outlet port and allowing the fluid flow to flow into the vessel. Once the first regulation valve 1312 opens its vessel outlet port again, there will be no more flow through the second regulation valve 1316, and it will return to the neutral position of Figure 11a as a result.

If the inflow into the second regulation valve 1316 is higher in temperature than the surroundings of the valve 1316, it will respond the same as the first regulation valve 1312, and ultimately direct the flow through its bypass outlet port, and through the second connection tube 1318 to the third regulation valve 1320.

The third regulation valve 1320 operates the same as the second regulation valve 1316. When it is in the position of Figure 11b, it will direct the flow through its bypass outlet port to the top outlet tube 1322, through which the flow will flow into the top of the vessel 1302.

It will be understood that the fluid flowing through the natural convection stratified loading device 1304 will always be inclined to exit through the vessel outlet ports of the regulation valves 1312, 1316, 1320 when they are in the position of either Figure 11a, 11c or 11d, because the fluid will be the same temperature or lower in temperature than the surroundings of the valves 1312, 1316, 1320, so there is no density difference at the position of the valve to drive the natural convection to a higher position in the vessel, and there is no significant pressure loss across the vessel outlet ports in the positions of Figure 11a, 11c and 11d.

The natural convection stratified loading device 1304 can thus both regulate the flow rate of the natural convection flow, so that the outlet temperature matches the temperature of the vessel, as well as direct the flow to different levels. This is of particular use when the heat source used for loading the heat storage system 1302 is a solar-thermal collector, which typically has highly variable heating power and an operating efficiency that is dependent on the operating temperature, and often requires a heat exchanger since a separate fluid circuit is required for the solar-thermal collector.

The following section will describe the functioning of the stratified inflow device 1306.

The stratified inflow device 1306 comprises an inlet tube 1324, a first switching valve 1326, a first outflow tube 1328, a switching valve connection tube 1330, a second switching valve 1332, a second outflow tube 1334 and a third outflow tube 1336, where the first and second switching valves are the same as the valve 1200, with reference to Figure 12.

The inlet tube 1324 is connected to the inlet port of the first switching valve 1326, and the first outflow tube 1328 is connected to the vessel outlet port of the first switching valve 1326. The bypass outlet port of the first switching valve 1326 is connected to the inlet port of the second switching valves 1332 through the switching valve connection tube 1330. The vessel outlet port of the second switching valve 1332 is connected to the second outflow tube 1334, and the bypass outlet port of the second switching valve 1332 is connected to the third outflow tube 1336.

When a fluid flow enters the stratified inflow device 1306 through the inlet tube 1324, it will flow into the inlet port of the first switching valve 1326, which will compare the temperature of the inflow to temperature of the surroundings of the valve 1326. When the inflow is lower in temperature than the surroundings of the first switching valve 1326, the first switching valve 1326 will direct the flow through its vessel outlet port, as described with reference to Figure 12, to the first outflow tube 1328, through which the flow will flow into the vessel 1302. When the inflow is higher in temperature than the surroundings, the first switching valve 1326 will direct the flow through its bypass outlet port, as described with reference to Figure 12, and the flow will flow through the switching valve connection tube 1330 to the inlet port of the second switching valve 1332.

The second switching valve 1332 will perform the same temperature comparison, and when it directs the flow through its vessel outlet port, the flow will flow into the vessel 1302 through the second outflow tube 1334, and when it directs the flow through its bypass outlet port, the flow will flow into the vessel through the third outflow tube 1336.

The stratified inflow device 1306 can direct the inflow to different positions in the vessel 1302, based on the difference in temperature between the inflow and the fluid inside the vessel at different positions in the vessel, so that disturbance to the thermal stratification of the fluid in the vessel 1302 is minimized, and thermal mixing is reduced. The outflow tubes 1328, 1334, 1336 have a diffuser at the end, so the flow exits horizontally and with reduced velocity, to minimize disturbance. The position where the flow flows into the vessel 1302 can be varied by varying the lengths of the outflow tubes. In the example of heat storage system 1300, the length of the outflow tubes is approximately half the distance between the first and second switching valves 1326, 1332, so that the position of the switching valve that makes the comparison in temperature is approximately in the middle of the respective outlets between which the switching valve switches. Other lengths of outflow tubes may be preferable, depending on the application.

The heat storage system 1300 may be used in a heating system that provides both space heating and heat for domestic hot water preparation, also known as a combi-system, where the heat source is a solar thermal collector in combination with an auxiliary heat source, for example a gas-fired boiler.

The vessel 1302 comprises four connection ports, in addition to the ports associated with the devices 1304, 1306, a first connection port 1338, a second connection port 1340, a third connection port 1342 and a fourth connection port 1344. The domestic hot water preparation device (not depicted) will draw hot fluid through the fourth connection port 1344, and return cold fluid through the first connection port 1338. The auxiliary heating (not depicted) will draw fluid through the second connection port 1340 and return fluid through the third connection port 1342, thereby keeping the vessel at a preset minimum temperature above the position of the second connection port 1340. The space heating device (not depicted), hydronic radiators in this example, will draw fluid from the connection port 1340, and return fluid through the stratified inflow device 1306, and the solar collector will supply heat to the vessel 1302 through the natural convection stratified loading device 1304.

The natural convection stratified loading device 1304 will deliver heat from the solar collector to the most appropriate level of the vessel 1302, depending on the available solar energy and the profile of the thermal stratification inside the vessel 1302.

The stratified inflow device 1306 will deliver the return flow from the space heating device to the most appropriate level in the vessel 1302, depending mainly on the temperature in the bottom half of the vessel 1302. The temperature in the bottom half of the vessel 1302 depends on how much solar energy is available, and how much domestic hot water is being used. When a high amount of solar energy is available compared to the energy demand of domestic water heating, and there has been little or no domestic hot water consumption recently, the bottom of the vessel will typically be hotter than the return flow from space heating, and the return flow will enter through outlet flow tube 1328. When there is a period of significant domestic hot water draw off, the bottom of the vessel will cool down, and since the return flow from the domestic hot water preparation device is typically much cooler than the return flow space heating radiators, the first switching valve 1326 will switch the return flow from the space heating through its bypass port to the second switching valve 1332, which will direct flow into the vessel at the higher position of the second outflow tube 1334. In a period when there is very little solar energy available, for example the middle of winter, the solar energy available will be much lower than the heat required for domestic hot water preparation, and the temperature in the bottom half of the tank will not be much higher than the return flow from the domestic hot water preparation device. In this case, both the first and second switching valves 1326,1332 will direct the flow through their respective bypass outlet ports, and the flow will enter the vessel through the third outlet flow tube 1336.

By preventing, to a significant degree, the relatively warm return flow from the space heating device from mixing with the relatively cool return flow from the domestic hot water preparation device, the solar collector can operate at a lower operating temperature and a higher efficiency.

The stratified inflow device can also be used for various other applications, for example a solar collector system that does not use a heat exchanger inside the storage vessel, or the return flow from domestic hot water preparation system that has a circulation function, which causes the return flow to sometimes be very high in temperature compared to normal operation.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

**Claims**

1. A valve (300) for controlling a flow rate of an inlet fluid, the valve comprising:

   a housing portion (304) having at least one fluid inlet (308) and at least one fluid outlet (310);
   at least one thermal actuator (302) comprising at least two containers (318,320) positioned at least partially within the housing portion (304), the at least two containers (318,320) defining respective interior portions for receiving a working fluid,

**characterized in that** the interior portions are in fluidal communication with each other, and at least one of the containers (318,320) is arranged such that the working fluid **in that** container can exchange thermal energy with the or another inlet fluid, and

**in that** the containers (318,320) are arranged such that a change in a temperature difference between the working fluid in the respective interior portions of the containers and within a predetermined range of temperature difference causes a quantity of the working fluid to be transferred in or out of at least one of the containers resulting in a change in mass distribution of the working fluid within the containers that causes movement of a portion of the valve which controls the flow rate of the inlet fluid.

2. The valve (300) of claim 1 **characterized in that** movement of the portion of the valve (300) causes a change in the flow coefficient of the valve, as experienced by fluid flowing from the at least one fluid inlet (308) to the at least one fluid outlet (310), thereby influencing the flow rate through the at least one fluid inlet (308).

3. The valve (300) of claim 1 or claim 2 **characterized in that** the valve is arranged so that the flow coefficient of the valve changes in a manner that is proportional to a change in the temperature difference between the working fluid in the respective interior portions of the containers (318,320) within the predetermined range of the temperature difference.

4. The valve (300) of any one of the preceding claims **characterized in that** the valve is arranged to interrupt the flow of the inlet fluid above or below a threshold level of the temperature difference between the working fluid in the respective interior portions of the containers (318,320) within the predetermined range of temperature difference.

5. The valve (300) of any one of the preceding claims **characterized in that** the valve is arranged such that a flow rate of a first inlet fluid is controlled based on a difference in temperature between a first inlet fluid and a second inlet fluid.

6. The valve (300) of any one of the preceding claims **characterized in that** the valve comprises a plurality of inlet ports (308,309) for receiving respective inlet fluids, and **in that** the valve is arranged such that a flow rate of at least one of the plurality of inlet fluids is controlled based on a difference in temperature between the at least one inlet fluid and a mixed inlet fluid that is formed by mixing at least some of the plurality of inlet fluids.

7. The valve (300) of any one of the preceding claims **characterized in that** the valve is arranged such that, by movement of the portion of the valve, the or a further portion of the valve at least partially obstructs one or more inlet ports (308,309) and/or one or more outlet ports (310).

8. The valve (300) of any one of the preceding claims **characterized in that** the portion of the valve is at least one of the containers (318,320) and the valve further comprises a flow regulator portion (330) that is coupled to the at least one container either directly or indirectly such that movement of the at least one container causes movement of the flow regulator portion (330) thereby changing the flow rate of one or more inlet fluids.

9. The valve (300) of claim 8 **characterized in that** the valve is arranged such that, by the movement of the portion of the valve, the regulator portion (330) at least partially obstructs one or more inlet ports (308,309) and/or one or more outlet ports (310) to control the flow rate of the inlet fluid.

10. The valve (300) of any one of the preceding claims **characterized in that** the at least one container (318, 320) and/or the regulator portion (330) is positioned in a manner such that the portion of the valve and/or the at least one container and/or the regulator portion is/are pivotable relative to the housing portion.

11. The valve (300) of any one of the preceding claims **characterized in that** the valve is arranged such that the movement of the portion of the valve and/or the at least one container (318,320) and/or the flow regulator (330) portion is substantially transversal relative to a flow direction of the inlet fluid.

12. The valve (300) of any one of the preceding claims **characterized in that** the containers (318,320) are coupled to each other directly or indirectly such that in response to the change in the temperature difference the at least two containers (318,320) move together.

13. The valve (300) of any one of the preceding claims **characterized in that** the fluidal communication between the at least two containers (318,320) is effected via a suitable conduit that is provided in the form of a bore in a wall portion that separates the respective interior portions of two adjacent containers.

14. The valve (300) of any one of the preceding claims **characterized in that** the valve comprises the working fluid that comprises a liquid component and a gaseous component.

15. The valve (300) of any one of the preceding claims **characterized in that** the valve comprises a plurality of thermal actuators (302).

**Patentansprüche**

1. Ventil (300) zur Steuerung einer Durchflussrate eines Einlassfluids, wobei das Ventil Folgendes umfasst:

   einen Gehäuseabschnitt (304), der mindestens einen Fluideinlass (308) und mindestens einen Fluidauslass (310) aufweist,
   mindestens einen thermischen Aktuator (302), der mindestens zwei Behälter (318, 320) umfasst, die mindestens teilweise innerhalb des Gehäuseabschnitts (304) angeordnet sind, wobei die mindestens zwei Behälter (318, 320) entsprechende innere Abschnitte definieren, um ein Arbeitsfluid zu empfangen"
   **dadurch gekennzeichnet**, das die inneren Abschnitte in fluidischer Verbindung miteinander stehen, und mindestens einer der Behälter (318, 320) derart angeordnet ist, dass das Arbeitsfluid in dem Behälter Wärmeenergie mit dem oder einem anderen Einlassfluid austauschen kann, und
   dass die Behälter (318, 320) derart angeordnet sind, dass eine Änderung eines Temperaturunterschieds zwischen dem Arbeitsfluid in den entsprechenden inneren Abschnitten der Behälter und innerhalb eines vorbestimmten Bereichs des Temperaturunterschieds verursacht, dass eine Menge des Arbeitsfluids in den oder aus dem mindestens einen Behälter übertragen wird, was zu einer Änderung der Massenverteilung des Arbeitsfluids innerhalb der Behälter führt, wodurch die Bewegung eines Abschnitts des Ventils verursacht wird, das die Durchflussrate des Einlassfluids steuert.

2. Ventil (300) nach Anspruch 1, **dadurch gekennzeichnet, dass** die Bewegung des Abschnitts des Ventil (300) eine Änderung des Durchflusskoeffizienten des Ventils verursacht, wie durch Fluid, das von dem mindestens einen Fluideinlass (308) zu dem mindestens einen Fluidauslass (310) fließt, zu sehen ist, wodurch die Durchflussrate durch den mindestens einen Fluideinlass (308) beeinflusst wird.

3. Ventil (300) nach Anspruch 1 oder Anspruch 2, **dadurch gekennzeichnet, dass** das Ventil derart angeordnet ist, dass sich der Durchflusskoeffizient des Ventils auf eine Weise verändert, die proportional zu einer Änderung des Temperaturunterschieds zwischen dem Arbeitsfluid in den entsprechenden inneren Abschnitten der Behälter (318, 320) innerhalb des vorbestimmten Bereichs des Temperaturunterschieds ist.

4. Ventil (300) nach einem der vorhergehenden Ansprüche, **dadurch gekennzeichnet, dass** das Ventil angeordnet ist, um den Fluss des Einlassfluids über oder unter einem Schwellenniveau des Temperaturunterschieds zwischen dem Arbeitsfluid in den jeweiligen inneren Abschnitten der Behälter (318, 320) innerhalb des vorbestimmten Bereichs des Temperaturunterschieds zu unterbrechen.

5. Ventil (300) nach einem der vorhergehenden Ansprüche, **dadurch gekennzeichnet, dass** das Ventil derart angeordnet ist, dass eine Durchflussrate eines ersten Einlassfluids auf der Grundlage eines Temperaturunterschieds zwischen einem ersten Einlassfluid und einen zweiten Einlassfluids gesteuert wird.

6. Ventil (300) nach einem der vorhergehenden Ansprüche, **dadurch gekennzeichnet, dass** das Ventil eine Vielzahl von Einlassöffnungen umfasst (308, 309), um entsprechende Einlassfluide zu empfangen, und dadurch, dass das Ventil derart angeordnet ist, dass die Durchflussrate von mindestens einem der Vielzahl von Einlassfluiden auf der Grundlage eines Temperaturunterschieds zwischen dem mindestens einen Einlassfluid und einen gemischten Einlassfluid gesteuert wird, das durch die Mischung von mindestens einem der Vielzahl von Einlassfluiden gebildet wird.

7. Ventil (300) nach einem der vorhergehenden Ansprüche, **dadurch gekennzeichnet, dass** das Ventil derart angeordnet ist, dass durch die Bewegung des Abschnitts des Ventils der oder ein weiterer Abschnitt des Ventils mindestens teilweise eine oder mehrere Einlassöffnungen (308, 309) und/oder eine oder mehrere Auslassöffnungen (310) blockiert.

**8.** Ventil (300) nach einem der vorhergehenden Ansprüche, **dadurch gekennzeichnet, dass** der Abschnitt des Ventils mindestens einer der Behälter (318, 320) ist und das Ventil weiterhin einen Durchflussreglerabschnitt (330) umfasst, der mit dem mindestens einen Behälter entweder direkt oder indirekt gekoppelt ist, so dass die Bewegung des mindestens einen Behälters die Bewegung des Durchflussreglerabschnitts (330) verursacht, wodurch die Durchflussrate von einem oder von mehreren Einlassfluiden verändert wird.

**9.** Ventil (300) nach Anspruch 8, **dadurch gekennzeichnet, dass** das Ventil derart angeordnet ist, dass durch die Bewegung des Abschnitts des Ventils der Reglerabschnitt (330) mindestens teilweise eine oder mehrere Einlassöffnungen (308, 309) und/oder eine oder mehrere Auslassöffnungen (310) blockiert, um die Durchflussrate des Einlassfluids zu steuern.

**10.** Ventil (300) nach einem der vorhergehenden Ansprüche, **dadurch gekennzeichnet, dass** mindestens einer des Behälters (318, 320) und/oder des Reglerabschnitts (330) derart positioniert ist, dass der Abschnitt des Ventils und/oder mindestens ein Behälter und/oder der Reglerabschnitt mit Bezug auf den Gehäuseabschnitt schwenkbar ist/sind.

**11.** Ventil (300) nach einem der vorhergehenden Ansprüche, **dadurch gekennzeichnet, dass** das Ventil derart angeordnet ist, dass die Bewegung des Abschnitts des Ventils und/oder mindestens ein Behälter (318, 320) und/oder der Durchflussreglerabschnitt (330) im Wesentlichen transversal mit Bezug auf die Durchflussrichtung des Einlassfluids ist.

**12.** Ventil (300) nach einem der vorhergehenden Ansprüche, **dadurch gekennzeichnet, dass** die Behälter (318, 320) miteinander direkt oder indirekt gekoppelt sind, so dass sich in Reaktion auf die Änderung des Temperaturunterschieds die mindestens zwei Behälter (318, 320) aufeinander zu bewegen.

**13.** Ventil (300) nach einem der vorhergehenden Ansprüche, **dadurch gekennzeichnet, dass** die fluidische Kommunikation zwischen den mindestens zwei Behältern (318, 320) über eine geeignete Leitung erfolgt, die in Form einer Bohrung in einem Wandabschnitt vorgesehen ist, der die entsprechenden inneren Abschnitte von zwei benachbarten Behältern trennt.

**14.** Ventil (300) nach einem der vorhergehenden Ansprüche, **dadurch gekennzeichnet, dass** das Ventil das Arbeitsfluid umfasst, das eine flüssige Komponente und eine gasförmige Komponente umfasst.

**15.** Ventil (300) nach einem der vorhergehenden Ansprüche, **dadurch gekennzeichnet, dass** das Ventil eine Vielzahl von thermischen Aktuatoren (302) umfasst.

**Revendications**

**1.** Soupape (300) de régulation d'un débit d'un fluide d'admission, la soupape comprenant :

une partie de logement (304) qui possède au moins une admission de fluide (308) et au moins une évacuation de fluide (310) ;
au moins un actionneur thermique (302) qui comprend au moins deux conteneurs (318, 320) positionnés au moins partiellement dans la partie de logement (304), les deux conteneurs (318, 320) au moins définissant des parties intérieures respectives destinées à recevoir un fluide de travail,
**caractérisée en ce que** les parties intérieures sont en communication de fluide les unes avec les autres, et au moins l'un des conteneurs (318, 320) est disposé de sorte que le fluide de travail dans ce conteneur puisse échanger une énergie thermique avec le ou un autre fluide d'admission, et
**en ce que** les conteneurs (318, 320) sont disposés de sorte qu'un changement de différence de température entre le fluide de travail dans les parties intérieures respectives des conteneurs et sur une plage de différences de température prédéterminée provoque le fait qu'une quantité de fluide de travail soit transférée dans ou en-dehors d'au moins l'un des conteneurs, et entraîne un changement de répartition de masse du fluide de travail dans les conteneurs, qui provoque le mouvement d'une partie de la soupape qui régule le débit du fluide d'admission.

**2.** Soupape (300) selon la revendication 1, **caractérisée en ce que** le mouvement de la partie de la soupape (300) provoque un changement de coefficient d'écoulement de la soupape, subi par le fluide qui s'écoule entre l'admission de fluide (308) au moins et l'évacuation de fluide (310) au moins, afin d'influencer le débit dans l'admission de fluide (308) au moins.

3. Soupape (300) selon la revendication 1 ou 2, **caractérisée en ce que** la soupape est disposée de sorte que le coefficient d'écoulement de la soupape change de manière proportionnelle à un changement de différence de température entre le fluide de travail dans les parties intérieures respectives des conteneurs (318, 320) sur la plage prédéterminée de différences de température.

4. Soupape (300) selon l'une quelconque des revendications précédentes, **caractérisée en ce que** la soupape est disposée pour interrompre l'écoulement du fluide d'admission au-dessus ou au-dessous d'un niveau de seuil de la différence de température entre le fluide de travail dans les parties intérieures respectives des conteneurs (318, 320) sur la plage prédéterminée de différences de température.

5. Soupape (300) selon l'une quelconque des revendications précédentes, **caractérisée en ce que** la soupape est disposée de sorte qu'un débit d'un premier fluide d'admission soit régulé sur la base d'une différence de température entre un premier fluide d'admission et un second fluide d'admission.

6. Soupape (300) selon l'une quelconque des revendications précédentes, **caractérisée en ce que** la soupape comprend une pluralité de ports d'admission (308, 309) destinés à recevoir des fluides d'admission respectifs, et **en ce que** la soupape est disposée de sorte qu'un débit d'au moins l'un de la pluralité de fluides d'admission soit régulé sur la base d'une différence de température entre le fluide d'admission au moins et un fluide d'admission mixte qui est formé en mélangeant au moins certains de la pluralité de fluides d'admission.

7. Soupape (300) selon l'une quelconque des revendications précédentes, **caractérisée en ce que** la soupape est disposée de sorte que, avec le mouvement de la partie de la soupape, la ou une autre partie de la soupape obstrue au moins partiellement un ou plusieurs port(s) d'admission (308, 309) et/ou un ou plusieurs port(s) d'évacuation (310).

8. Soupape (300) selon l'une quelconque des revendications précédentes, **caractérisée en ce que** la partie de la soupape est au moins l'un des conteneurs (318, 320) et la soupape comprend en outre une partie de régulation du débit (330) qui est reliée au conteneur au moins, directement ou indirectement, de sorte que le mouvement du conteneur au moins provoque un mouvement de la partie de régulation du débit (330) afin de modifier le débit d'un ou plusieurs fluide(s) d'admission.

9. Soupape (300) selon la revendication 8, **caractérisée en ce que** la soupape est disposée de sorte que, avec le mouvement de la partie de la soupape, la partie de régulation (330) obstrue au moins partiellement un ou plusieurs port(s) d'admission (308, 309) et/ou un ou plusieurs port(s) d'évacuation (310) de façon à réguler le débit du fluide d'admission.

10. Soupape (300) selon l'une quelconque des revendications précédentes, **caractérisée en ce que** le conteneur (318, 320) au moins et/ou la partie de régulation (330) est positionné(e) de sorte que la partie de la soupape et/ou le conteneur au moins et/ou la partie de régulation puisse(nt) pivoter par rapport à la partie de logement.

11. Soupape (300) selon l'une quelconque des revendications précédentes, **caractérisée en ce que** la soupape est disposée de sorte que le mouvement de la partie de la soupape et/ou du conteneur (318, 320) au moins et/ou de la partie de régulation du débit (330) soit sensiblement transversal par rapport à une direction d'écoulement du fluide d'admission.

12. Soupape (300) selon l'une quelconque des revendications précédentes, **caractérisée en ce que** les conteneurs (318, 320) sont reliés les uns aux autres directement ou indirectement de sorte que, en réponse au changement de différence de température, les deux conteneurs (318, 320) au moins se déplacent ensemble.

13. Soupape (300) selon l'une quelconque des revendications précédentes, **caractérisée en ce que** la communication de fluide entre les deux conteneurs (318, 320) au moins s'effectue par le biais d'une conduite adaptée qui est prévue sous la forme d'un alésage dans une partie de paroi qui sépare les parties intérieures respectives de deux conteneurs adjacents.

14. Soupape (300) selon l'une quelconque des revendications précédentes, **caractérisée en ce que** la soupape comprend le fluide de travail qui comprend un composant liquide et un composant gazeux.

**15.** Soupape (300) selon l'une quelconque des revendications précédentes, **caractérisée en ce que** la soupape comprend une pluralité d'actionneurs thermiques (302).

Figure 1

Figure 2a

Figure 2b

Figure 2c

Figure 2d

Figure 2e

Figure 2f

Figure 2g

Figure 2h

Figure 2i

Figure 3a

Figure 3b

Figure 3c

Figure 3d

Figure 3e

Figure 3f

Figure 4a

Figure 4b

Figure 4c

Figure 4d

Figure 4e

Figure 4f

Figure 5a

Figure 5b

Figure 6a

Figure 6b

Figure 6c

Figure 6d

Figure 6e

Figure 6f

Figure 7a

Figure 7b

Figure 7c

Figure 7d

EP 2 781 812 B1

Figure 8a

Figure 8b

Figure 9a

Figure 9b

Figure 10a

Figure 10b

Figure 11a

Figure 11b

Figure 11c

Figure 11d

Figure 12a

Figure 12b

Figure 12c

Figure 12d

Figure 12e

Figure 13

**EP 2 781 812 B1**

**REFERENCES CITED IN THE DESCRIPTION**

**Patent documents cited in the description**

- WO 2011128527 A1
- US 13622133 B